# EUROPÄISCHE PATENTSCHRIFT

(11) **EP 3 101 404 B1**
(45) Veröffentlichungstag und Bekanntmachung des Hinweises auf die Patenterteilung: **29.12.2021**
(21) Anmeldenummer: 16162744.3
(22) Anmeldetag: 30.03.2016
(51) Int. Cl.: G01M 17/007, G01M 17/00

(54) **TESTSYSTEM UND TESTVERFAHREN SOWIE KONFIGURATIONSSYSTEM UND KONFIGURATIONSVERFAHREN ZUR KONFIGURATION WENIGSTENS EINER FAHRZEUGFÜHRER-SYSTEM-SCHNITTSTELLE**
TEST SYSTEM AND TEST METHOD AND CONFIGURATION SYSTEM AND CONFIGURATION METHOD FOR CONFIGURING AT LEAST ONE VEHICLE DRIVER SYSTEM INTERFACE
SYSTÈME D'ESSAI ET PROCÉDÉ D'ESSAI ET SYSTÈME DE CONFIGURATION ET PROCÉDÉ DE CONFIGURATION DESTINÉ À CONFIGURER AU MOINS UNE INTERFACE SYSTÈME-CONDUCTEUR DE VÉHICULE

(30) Priorität: 30.03.2015 DE 102015104890
(43) Veröffentlichungstag der Anmeldung: 07.12.2016
(73) Patentinhaber: GPI Gesellschaft für Prüfstanduntersuchungen und Ingenieurdienstleistungen mbH, 08115 Lichtentanne OT Stenn (DE)
(72) Erfinder: Mehnert, Jens, 08468 Heinsdorfergrund (DE)
(74) Vertreter: Steiniger, Carmen

(56) Entgegenhaltungen:
- DE-A1-102007 031 040
- DE-A1-102012 025 468
- EMELI ADELL ET AL: "Test of HMI Alternatives for Driver Support to Keep Safe Speed and Safe Distance - A Simulator Study", THE OPEN TRANSPORTATION JOURNAL, Bd. 2, Nr. 1, 30. Oktober 2008 (2008-10-30), Seiten 53-64, XP055396397, ISSN: 1874-4478, DOI: 10.2174/1874447800802010053
- GIETELINK O J ET AL: "Development of a driver information and warning system with vehicle hardware-in-the-loop simulations", MECHATRONICS, PERGAMON PRESS, OXFORD, GB, Bd. 19, Nr. 7, 1. Oktober 2009 (2009-10-01), Seiten 1091-1104, XP026693409, ISSN: 0957-4158, DOI: 10.1016/J.MECHATRONICS.2009.04.012 [gefunden am 2009-08-18]
- Olaf J. Gietelink: "Design and validation of advanced driver assistance systems", , 19. November 2007 (2007-11-19), XP055195483, Delft, Netherlands Gefunden im Internet: URL:http://resolver.tudelft.nl/uuid:b2f0e7 f6-6255-4932-8b5e-d3ef67cd81ec [gefunden am 2015-06-12]

## Beschreibung

Die vorliegende Erfindung betrifft ein Testsystem, das einen Fahrzeugprüfstand; ein auf dem Fahrzeugprüfstand befindliches Kraftfahrzeug; wenigstens eine, in oder an dem Fahrzeugprüfstand und/oder in oder an dem Kraftfahrzeug und/oder separat von dem Fahrzeugprüfstand und dem Kraftfahrzeug vorgesehene Signaleinheit, mit welcher wenigstens ein fahrzeugbetriebsspezifisches und/oder optisches und/oder akustisches und/oder haptisches und/oder fahrsituationsbezogenes und/oder umweltbezogenes Signal ausgeb- oder anzeigbar und/oder manipulierbar ist; und wenigstens ein Einstellmodul für die wenigstens eine Signaleinheit aufweist. Die Erfindung betrifft darüber hinaus ein auf dem Testsystem beruhendes Konfigurationssystem.

Die Erfindung betrifft ferner ein Testverfahren, bei dem ein Kraftfahrzeug auf einem Fahrzeugprüfstand betrieben wird und durch wenigstens eine, in oder an dem Fahrzeugprüfstand und/oder in oder an dem Kraftfahrzeug und/oder separat von dem Fahrzeugprüfstand und dem Kraftfahrzeug vorgesehene Signaleinheit wenigstens ein fahrzeugbetriebsspezifisches und/oder optisches und/oder akustisches und/oder haptisches und/oder fahrsituationsbezogenes und/oder umweltbezogenes Signal ausgegeben, angezeigt und/oder manipuliert wird. Die Erfindung betrifft auch ein auf dem Testverfahren basierendes Konfigurationsverfahren.

Aus der Druckschrift DE 10 2007 031 040 A1 sind eine Prüfvorrichtung und ein Prüfverfahren der eingangs genannten Gattung bekannt, mit welchen ein Fahrassistenzsystem eines Fahrzeugs auf dessen Funktionstüchtigkeit geprüft werden kann. Dabei befindet sich das führerlose Fahrzeug auf einem Fahrzeugprüfstand, wobei mit einem Simulator das Umfeld des Fahrzeuges simuliert wird. In Abhängigkeit von dem jeweiligen Umfeldsimulationssignal wird die Reaktion des Fahrassistenzsystems geprüft.

Der demografische Wandel und der Verkehrsalltag gestalten sich dahingehend, dass der Anteil der älteren Bevölkerung zunimmt. Der Wille und die Notwendigkeit, als älterer oder auch als behinderter Mensch aktiv am Verkehrsgeschehen teilzunehmen, steigen. Weiterhin ist zu beobachten, dass die Verkehrsdichte enorm zunimmt. Älteren oder behinderten Verkehrsteilnehmern bereitet es zudem vermehrt Schwierigkeiten, den komplexen Fahrsituationen gewachsen zu sein, da ihre konativen bzw. kognitiven Fähigkeiten im Alter nachlassen. Zu diesen Fähigkeiten gehören unter anderem die Reaktionsfähigkeit, die Sehkraft und die Hörleistung.

Weiterhin wird sich in den nächsten Jahren der schrittweise Übergang von kraftstoff- zu hybrid- oder vollständig elektrizitätsangetriebenen Kraftfahrzeugen deutlich beschleunigen. Zusätzlich werden Fahrzeugführer seit Jahren mit immer mehr elektronischen Systemen zur Verbesserung der aktiven und passiven Sicherheit, Assistenzsystemen sowie Komfort- und Kommunikationssystemen im Kraftfahrzeug konfrontiert.

Um das Führen eines Kraftfahrzeuges im Straßenalltag sicherer und leichter gestalten zu können, sind aus dem Stand der Technik Fahrassistenzsysteme mit verschiedenartigsten Funktionen bekannt. Derzeit gehören Komforteinstellungen, wozu beispielsweise Sitz-, Lenkrad- oder Spiegeleinstellungen zählen, zu bekannten Komfortfunktionen solcher Assistenzsysteme. Weiterhin können verschiedene Kommunikationsmöglichkeiten, wie beispielsweise ein Telefon oder Smartphone, ein Radio, ein Verkehrsfunkmodul, ein Unfalldatenerfassungssystem (Dashboard) oder ein Notrufassistenzsystem im Kraftfahrzeug, integriert sein.

Insbesondere die hohe Entwicklungsdynamik dieser technischen Fahrsicherheits-, Begleit-, Führungs- und Assistenzsysteme kann jedoch schnell zu einer Überforderung des Fahrers führen und in der Folge das Risiko von Unfällen spürbar erhöhen. Im Ergebnis nehmen die Bereitschaft und auch die Fähigkeit zur Beibehaltung der gewohnten Mobilität, insbesondere bei älteren Menschen, deutlich ab.

Weiterhin ist es im Stand der Technik bekannt, dass Einstellungen an der Fahrdynamik oder Notlenkungsmanöver vorgenommen werden können. Ebenfalls kann das Fahrwerk oder das Feder-Dämpfungsverhalten eines Kraftfahrzeuges an den jeweiligen Fahrstil eines Fahrzeugführers angepasst werden.

Das von Mercedes veröffentlichte Fahrassistent-Paket "Plus" beinhaltet eine Abstandsregelung, eine Spurwechselkontrolle, eine Totwinkelwarnung mit Korrektureingriff über eine ESP(Elektronische Stabilitätsprogramm)-Steuerung sowie eine Optimierungsmöglichkeit der Bremsleistung. Beispielsweise wird der Kraftfahrer durch ein akustisches Signal vor einem drohenden Auffahrunfall gewarnt. Bei einer Nichtreaktion des Kraftfahrers wird eine Teilbremsung eingeleitet, wobei die Bremsleistung 40 % der Maximalbremsleistung beträgt. Reagiert der Fahrzeugführer auf diese haptische Warnung nicht, löst das Bremssystem eine Vollbremsung aus. Bei der benannten Totwinkelwarnung erfolgt sowohl eine optische als auch eine akustische Warnung. Wird ein Spurwechsel durch den Fahrzeugführer trotzdem vollzogen, greift das System über die ESP-Steuerung aktiv ein. Die ESP-Steuerung dient dazu, das Kraftfahrzeug richtungsstabilisierend in einer bestimmten Spur zu halten.

In dem vom Bundesministerium für Bildung und Forschung (BMBF) geförderten Forschungsvorhaben "SMART SENIOR" wurde ein System entwickelt, mit welchem eine sichere Mobilität, eine Gesundheitsdienstleistung und daraus resultierend eine längere Selbstständigkeit älterer Fahrzeugführer geschaffen wird.

Bei diesem System wird vorrangig eine Notfallassistenz aufgebaut, bei welcher die Vitalparameter des Fahrzeugführers innerhalb und außerhalb des Fahrzeuges erfasst und analysiert werden. Die Überwachungsfunktion übernimmt hierbei das Telemedizin-Zentrum der Charite Berlin (TMC). Bei einer definierten Abweichung von Vitalstatusdaten der beim TMC hinterlegten Solldaten des jeweiligen Fahrzeugführers von den momentan übermittelten Daten wird das Fahrzeug in einen autonomen Fahrmodus überführt und ein abgesichertes Nothaltemanöver automatisch durchgeführt. Das Fahrzeug aktiviert die Warnblinkanlage und wird kontrolliert bis zum Stillstand manövriert. Weiterhin wird ein gleichzeitiger Notruf an medizinische Versorgungseinrichtungen abgesetzt.

Das "SMART SENIOR"-System verfügt über ein erweitertes Ortungssystem, das heißt, dass über ein GPS (Globales Positionsbestimmungssystem) der jeweilige Fahrzeugführer oder auch Fußgänger von Rettungskräften geortet werden kann.

Ein weiteres vom BMBF gefördertes Projekt mit dem Titel "Sonic Sentinel" dient der akustischen Erkennung von Gefahrensituationen bei der Pflege oder in der häuslichen Umgebung. Dieses Projekt erforscht ebenfalls die im Alter nachlassende Wahrnehmungsschwelle.

Das ebenfalls vom BMBF geförderte Projekt "PASS Personalisiertes Assistenzsystem und Services für Mobilität im hohen Alter" untersucht unter anderem Schnittstellen zwischen verschiedenen Verkehrsträgern und notwendigen begleitenden Services.

In der Druckschrift WO 2010/015218 A1 sind integrierte Umweltsensoren mit einer eigenen Auswerteeinheit gekoppelt. Daten aus einer digitalen Straßenkarte werden jeweils für das relevante Gebiet mit den laut Umweltsensor gelieferten Daten abgeglichen. Dieses Fahrassistenzsystem dient unter anderem der Verkehrszeichenerkennung und kann darüber hinaus als Geschwindigkeitsassistent genutzt werden.

Die Dürr Assembly Product GmbH veröffentlichte einen Fahrassistenzsystem-Prüfstand "x-DASalign" zur Überprüfung von Fahrassistenzsystemen. Mit diesem Prüfstand können einzelne Fahrassistenzsysteme im Kraftfahrzeug überprüft und gegebenenfalls justiert werden. Ein Lasermesssystem dient der Ermittlung der benötigten Fahrwerksparameter des Kraftfahrzeuges und zudem der Justierung der Fahrassistenzsysteme. Auf dem genannten Prüfstand können unter anderem Systeme des Spurwechsels, der Spurhaltigkeit und des Abstandes zu umgebenden Fahrzeugen oder Hindernissen geprüft werden. Weiterhin lässt sich hiermit die Funktion von in das Kraftfahrzeug integrierten Rückfahrkameras, Spiegel-, Kotflügel-, Scheinwerferkameras oder Nachtsichtassistenten überprüfen.

Die THESIS DYNAware hat gemeinsam mit BMW einen Prüfstand zur funktionalen Absicherung von kamerabasierten Fahrassistenzfunktionen entwickelt. Das veröffentlichte System DYNA4 Driver Assistance ist in der Lage, virtuelle Testfahrten in Simulationsumgebungen mit Hilfe eines Prüfstandes durchzuführen. Dabei wird ein Kamerasystem mit einer DYNAanimation stimuliert. Es können verschiedene Steuergerätefunktionen getestet werden, wie zum Beispiel unter anderem eine Fahrspurerkennung, eine Fahrzeugerkennung oder auch eine Verkehrszeichenerkennung.

Im Stand der Technik werden zum Prüfen von Kraftfahrzeugen Rollenprüfstände verwendet.

Ein solcher Rollenprüfstand ist beispielsweise in der Druckschrift DE 10 2009 051 971 A1 beschrieben. Im Vordergrund steht bei diesem Rollenprüfstand eine Überprüfung der Funktionstüchtigkeit der Anschlussregelung. Die dargestellte Prüfeinrichtung weist einen geteilten Untergrund, zumindest für die angetriebenen Räder des Kraftfahrzeuges, auf. Dabei befindet sich ein Rad des Kraftfahrzeuges auf einer angetriebenen Achse auf einem griffigen und das andere Rad auf einem nicht griffigen Untergrund. Auf diese Weise können verschiedene Zustände der Straßenbeläge simuliert werden und das zugehörige Regelverhalten der Stellenglieder ermittelt und ausgewertet werden.

Aus der Druckschrift DE 10 2010 009 096 A1 ist weiterhin ein Rollenprüfstand bekannt, der mindestens eine mittels eines Antriebes angetriebene Rolle aufweist, wodurch ein Kraftfahrzeug betrieben werden kann. Mit diesem Rollenprüfstand kann die Fahrzeugposition erfasst und ausgewertet werden. Bei extremer Abweichung der Fahrzeugposition kann eine Trägervorrichtung eingesetzt werden und das Fahrzeug in eine Grundposition gebracht werden. Diese Trägervorrichtung dient der verbesserten Arbeitssicherheit des Prüfpersonals.

Bei dem in der Druckschrift DE 10 2010 034 850 A1 beschriebenen Prüfstand erfolgt eine Erfassung der eingeleiteten Kräfte bzw. Momente während des Fahrbetriebes eines Kraftfahrzeuges. Dieser Prüfstand ist in der Lage, eine weitgehend realistische Simulation von Straßenfahrten, insbesondere von intensiv beschädigten Strecken, zu gewährleisten. Bei dem verwendeten Prüfverfahren wird ein Prüfstandskonzept im Vorfeld erarbeitet. An der Radaufstandsplatte angreifende Aktoren gewährleisten über den Radaufstandspunkt in das Kraftfahrzeugrad den Kraftfluss. Von dort aus wird der Kraftfluss in das Kraftfahrzeug weitergeleitet, wodurch ein realer Krafteinleitungsmechanismus von Straße-Kraftfahrzeugrad-Fahrzeug nachgestellt wird.

Die Druckschrift DE 20 2010 010 039 U1 stellt einen Rollenprüfstand vor, der zur Überprüfung der Grundfunktion eines Kraftfahrzeuges dient. Der Antrieb der Prüfstandsrollen erfolgt in diesem Fall durch Drehung der Räder des Kraftfahrzeuges.

In der Druckschrift EP 1362002 B1 ist ein Prüfstand beschrieben, der mit einer Kippvorrichtung ausgestattet ist.

In der Druckschrift DE 3841248 A1 wird ein Rollenprüfstand vorgeschlagen, bei dem die Räder des Kraftfahrzeuges einzeln angetrieben werden können. Dieser Rollenprüfstand dient vorrangig der Untersuchung des Bremsverhaltens von Kraftfahrzeugen, insbesondere Allradkraftfahrzeugen, und der Untersuchung des Antiblockiersystems.

Aus der Druckschrift WO 2010/034743 ist ein Prüfstand bekannt, der zur Überprüfung der Bremsanlagen von Kraftfahrzeugen dient.

Die Druckschrift DE 10236620 A1 enthält einen Kraftfahrzeugprüfstand, bei dem das Kraftfahrzeug mit einer Steuereinrichtung und mit einer elektronischen Fahrprüfeinrichtung verbunden ist. Weiterhin weist dieser Prüfstand eine Kopplung mit externen elektrischen Fahrprüfungsprogrammen auf.

Die Druckschrift DE 10 2012 018 359 A1 enthält einen Fahrzyklus-Datensatz zur Simulation eines Fahrzyklus eines Kraftfahrzeuges. Der Datensatz wird hierbei automatisch mit einem Fahrmodell aus einer Straßenkarte entsprechend einer gewünschten Fahrroute erzeugt. In der Druckschrift ist angegeben, dass eine rein virtuelle Fahrsimulation oder auch eine Fahrsimulation auf einem Prüfstand erfolgen kann.

Die Druckschrift DE 10 2010 026 546 A1 beinhaltet einen Prüfstand mit einer Fahrsimulationssteuerung. An diesem Prüfstand werden das Abgasverhalten und die Verbrauchsdaten des Kraftfahrzeuges untersucht.

Die Druckschrift DE 10 2012 025 468 A1 beschreibt ein Fahrerassistenzsystem, dessen Funktionalität anhand einer Reaktionszeit eines Fahrzeugführers zu einem optimalen Zeitpunkt bereitgestellt wird. Die Reaktionszeit des Fahrzeugführers ist unter anderem von einer Stimulusintensität abhängig, welche beispielsweise durch die Sichtbarkeit eines Objektes bestimmt wird. Das Assistenzsystem bestimmt die Sichtbarkeit von Objekten mittels einer Kamera und Sensordaten, anhand welcher die Funktionalität des Fahrassistenzsystems bereitgestellt wird. Eine Anpassung der Funktionalität des Fahrerassistenzsystems erfolgt mittels einer von dem Fahrerassistenzsystem vorgesehenen elektronischen Steuereinrichtung.

In dem Artikel "Test of HMI Alternatives for Driver Support to Keep Safe Speed and Safe Distance - A Simulator Study" von Emeli Adell et al ist die Entwicklung und Erprobung von Fahrzeugassistenzsystemen beschrieben, welche einen Fahrer bei der Einhaltung einer vorgegebenen Geschwindigkeit und eines Sicherheitsabstandes zu einem vorausfahrenden Fahrzeug unterstützen sollen. Hierzu wurde mittels eines Fahrsimulators analysiert, welche Warn- bzw. Unfallvermeidungsmöglichkeiten am geeignetsten und bei Fahrern am akzeptiertesten sind. Hierbei wurden verschiedene zur Auswahl stehende Warn- bzw. Unfallvermeidungsmöglichkeiten, wie beispielsweise verschiedene optische Warnsignale, in einem Fahrsimulator integriert und der Fahrsimulator von unterschiedlichen Personen Probe gefahren.

Die Druckschrift "Development of a driver information and warning system with vehicle hardware-in-the-loop simulations" ebenso wie die Druckschrift "Design and Validation of Advanced Driver Assistance Systems" von Olaf Gietelink beschreibt einen Rollenprüfstand,_auf welchem ein automatisch gesteuertes Fahrzeug platziert wird. Vor dem Fahrzeug ist eine ein Auto nachbildende "moving base" vorgesehen, mittels welcher die Funktionalität eines Fahrassistenzsystems überprüft werden kann. Das Umgebungsumfeld des zu testenden Fahrzeuges wird zusätzlich mittels Bildschirmen visualisiert. Zur Überprüfung der Funktionalität des jeweiligen Assistenzsystems wird das Assistenzsystem unter verschiedenen Fahrbedingungen und im Hinblick auf verschiedene Fahrzeugführertypen geprüft. Anhand der ermittelten Werte wird die Funktionalität des Fahrerassistenzsystems bestimmt.

Es ist die Aufgabe der vorliegenden Erfindung, ein Test- und ein Konfigurationssystem sowie ein Test- und ein Konfigurationsverfahren der oben genannten Gattung bereitzustellen, die eine fahrzeugführerbezogene Prüfung und/oder Einstellung von in Kraftfahrzeugen vorhandenen technischen Fahrsicherheits-, Begleit-, Führungs- und/oder Assistenzsystemen ermöglichen.

Diese Aufgabe wird zum einen durch ein Testsystem der eingangs genannten Gattung gelöst, bei dem das Testsystem ein Testsystem zum Test einer fahrzeug- und/oder fahrzeugführerspezifischen Signalwahrnehmung und -reaktion ist, wobei das Kraftfahrzeug mit einem das Kraftfahrzeug bedienenden Fahrzeugführer oder Fahrzeugführersimulator ausgestattet ist; die wenigstens eine Messeinrichtung eine Messeinrichtung zum direkten oder indirekten Erfassen wenigstens einer Regelgröße und/oder Reaktionszeit des Kraftfahrzeugs und/oder eines mechatronischen Systems des Kraftfahrzeuges und/oder des Fahrzeugführers oder Fahrzeugführersimulators auf das wenigstens eine Signal ist; das Einstellmodul mit der Messeinrichtung gekoppelt ist und das Einstellmodul eine Iterationseinheit aufweist, mit der Ausgabeintensität und/oder Signalart und/oder ein zeitlicher Offset der wenigstens einen Signaleinheit iterativ zur Verringerung der Reaktionszeit änderbar ist.

Bei dem erfindungsgemäßen Testsystem kommt zum Testen der fahrzeug- und/oder fahrzeugführerspezifischen Signalwahrnehmung und/oder -reaktion vorzugsweise folgende Vorgehensweise zum Einsatz: Zunächst wird ein Kraftfahrzeug unter an dem Fahrzeugprüfstand einstellbaren Grundbedingungen betrieben. Daraufhin wird in das derart geschaffene Testsystem eine Störgröße eingeleitet, die mit der Ausgabe oder Anzeige wenigstens eines optischen und/oder akustischen und/oder haptischen, fahrsituationsbezogenen und/oder umweltbezogenen und/oder fahrzeugbetriebsspezifischen Signals verbunden ist. Zeitgleich und/oder in einem ebenfalls einstellbaren Zeitraum nach der Störgrößeneinleitung wird wenigstens eine Reaktion des Fahrzeugführers durch die Messeinrichtung, die wenigstens einen in oder an dem Kraftfahrzeug oder dem Fahrzeugprüfstand befindlichen Sensor aufweist, direkt oder indirekt erfasst. Dann wird die Reaktion des Fahrzeugführers, beispielsweise wie unten näher erläutert, speziell mit der das Bewertungsmodul für die von der Messeinrichtung erfassten Daten umfassenden Datenerfassungs- und/oder Auswerteeinheit im Rahmen eines Soll-Ist-Vergleiches, bewertet. In Abhängigkeit von dem Ergebnis der Bewertung erfolgt daraufhin durch ein das Testsystem umfassendes Konfigurationssystem eine Korrektur wenigstens eines technischen Fahrsicherheits-, Begleit-, Führungs- und/oder Assistenzsystems des Kraftfahrzeuges.

Bei der vorliegenden Erfindung kann das Kraftfahrzeug auf dem Fahrzeugprüfstand in realitätsnahen Fahrmoden betrieben werden, ohne dass es für den das Kraftfahrzeug bedienenden Fahrzeugführer zu einer tatsächlichen, durch Reaktionsfehler des Fahrzeugführers oder Fahrzeugführersimulators bedingten Gefahrensituation kommt.

Ein weiterer Vorteil des erfindungsgemäßen Testsystems besteht darin, dass damit gleichbleibende Testbedingungen zur Verfügung gestellt werden können, wobei die fahrzeug- und/oder fahrzeugführerspezifische Signalwahrnehmung und -reaktion direkt in Abhängigkeit von einzelnen oder mehreren dieser konkret an dem erfindungsgemäßen Testsystem einstellbaren Testbedingungen getestet werden kann und im Prinzip keine äußeren, sondern nur gezielt mittels des Testsystems einstellbare Fehlereinflüsse vorhanden sind.

Bei dem erfindungsgemäßen Testsystem können über die wenigstens eine Signaleinheit verschiedene, unterschiedliche Verkehrssituationen charakterisierende Signale abgegeben werden. Diese Signale können optische Signale, wie zum Beispiel Licht- und/oder Farbsignale, und/oder akustische Signale, wie beispielsweise Sirenen- oder Hupsignale, und/oder haptische Signale, wie beispielsweise ein Stoß gegen das Kraftfahrzeug, der einen Aufprall simuliert, oder ein Rütteln des Kraftfahrzeuges, durch welche Signale eine unebene Fahrbahnbeschaffenheit simulierbar ist, oder ein Rütteln des Lenkrades des Kraftfahrzeuges oder ein Vibrieren wenigstens einer Pedale des Kraftfahrzeuges, sein. Bei dem erfindungsgemäßen Testsystem können dabei die mit zunehmendem Alter oder auch durch eine Behinderung sich verändernden Wahrnehmungsschwellen des Fahrzeugführers, insbesondere abgestellt auf die in Kraftfahrzeugen etablierten visuellen, akustischen und haptischen Kommunikationswege, berücksichtigt werden und die Signale an die aktuellen konativen und kognitiven Fähigkeiten des Fahrzeugführers angepasst und/oder mit diesen mitgeführt werden.

Die Signalausgaben können bei dem erfindungsgemäßen Testsystem personenspezifisch, beispielsweise seniorengerecht, aufeinander und verkehrsszenarienabhängig abgestimmt werden.

Das Signal kann fahrsituationsbezogen, wie beispielsweise das Signal eines Verkehrszeichens, und/oder umweltbezogen, wie beispielsweise eine Einwirkung durch einen glatten Fahrbahnuntergrund oder eines auf die Fahrbahn laufenden Tieres, und/oder fahrzeugbetriebsspezifisch, wie beispielsweise eine Wirkung durch einen geplatzten Fahrzeugreifen des Kraftfahrzeuges, sein. Mit der wenigstens einen Messeinrichtung ist erfassbar, ob, wie und mit welcher Reaktionszeit und/oder auf welche Weise das Kraftfahrzeug und/oder der das Kraftfahrzeug bedienende Fahrzeugführer auf das jeweilige Signal reagiert. Daraus lässt sich einerseits ableiten, ob das Signal geeignet und/oder ausreichend stark ist, um von dem Fahrzeugführer rechtzeitig und richtig erfasst werden zu können. Ferner lässt sich aus den mit der Messeinrichtung erfassten Messwerten ableiten, inwieweit das Signal verändert und/oder durch andere Signale ersetzt oder ergänzt werden muss, um eine rechtzeitige und richtige Reaktion des Fahrzeugführers auf die jeweilige Situation zu ermöglichen.

Entsprechend weist das erfindungsgemäße Testsystem in einer vorteilhaften Ausführungsform der Erfindung außerdem ein Einstellmodul für die wenigstens eine Signaleinheit auf, mit welcher das wenigstens eine Signal konkret an das Reaktionsverhalten des des Fahrzeugführers, das heißt an die jeweilige fahrzeug- und/oder fahrzeugführerspezifische Signalwahrnehmung und -reaktion, angepasst werden kann.

Bei dem erfindungsgemäßen Testsystem ist das Einstellmodul mit der Messeinrichtung gekoppelt, und das Einstellmodul weist eine Iterationseinheit auf, mit der Ausgabeintensität und/oder Signalart und/oder ein zeitlicher Offset der wenigstens einen Signaleinheit iterativ zur Verringerung der Reaktionszeit änderbar ist. Somit können dem Einstellmodul die mit der Messeinrichtung erfassten Messwerte unmittelbar übermittelt werden, woraufhin mit dem Einstellmodul Einstellungen an der wenigstens einen Signaleinheit zur Veränderung wenigstens eines Signals vorgenommen werden können. Dabei kann durch die Iterationseinheit des Einstellmoduls die Ausgabeintensität und/oder die Signalart der wenigstens einen Signaleinheit unmittelbar Stück für Stück derart verändert werden, dass die Reaktionszeit des Fahrzeugführers

auf das wenigstens eine Signal verringert und/oder die Reaktionsweise des Fahrzeugführers auf das wenigstens eine Signal abgestimmt und damit die Sicherheit des Fahrzeugführers in dem Kraftfahrzeug beim Fahren erhöht werden kann.

Eine besonders realitätsnahe Testsituation kann dann geschaffen werden, wenn die Signaleinheit des erfindungsgemäßen Testsystems wenigstens einen Bildschirm und/oder wenigstens eine Bildprojektionseinrichtung aufweist, wobei wenigstens eine Bildwiedergabefläche des Bildschirmes und/oder der Bildprojektionseinrichtung in einem Sichtfeld des Fahrzeugführers ausgebildet ist. Der Bildschirm bzw. die Bildwiedergabefläche kann beispielsweise wenige Meter, wie zum Beispiel in einem Bereich von 1 bis 10 Meter, vor der Frontscheibe des Kraftfahrzeuges vorgesehen sein. Der Bildschirm oder die Bildwiedergabefläche kann aber auch neben wenigstens einem der Seitenfenster des Kraftfahrzeuges und/oder hinter der Heckscheibe des Kraftfahrzeuges vorgesehen sein. Der Bildschirm oder die Bildwiedergabefläche kann dabei sowohl flach als auch gewölbt ausgebildet sein. Der Bildschirm oder die Bildwiedergabefläche kann auch aus mehreren einzelnen, miteinander verbundenen oder örtlich voneinander getrennten Bildschirm- und/oder Bildwiedergabeflächeneinheiten bestehen. Auf der jeweiligen Bildwiedergabefläche können ein einfaches optisches Signal, ein einzelnes, stehendes Bild, aufeinander abfolgende und/oder sich wiederholende Bildsequenzen und/oder ein oder mehrere Filme gezeigt werden. Das optische Signal, das Bild, die Bildsequenz und/oder der Film enthält dabei typischerweise wenigstens ein fahrsituationsbezogenes und/oder umweltbezogenes Signal. So kann beispielsweise in einem Film ein konkretes Verkehrsgeschehen wiedergegeben werden, auf welches der Fahrzeugführer reagieren soll. Mit Hilfe der Einstellungsmöglichkeiten des Bildes am Bildschirm oder der Bildprojektionseinrichtung können beispielsweise Entfernung, Farbe, Schärfe, Helligkeit und/oder Kontrast einzelner Verkehrssignale, Verkehrsteilnehmer und/oder Umweltbestandteile unterschiedlich eingestellt werden, um die Reaktionsfähigkeit des Fahrzeugführers in Abhängigkeit von unterschiedlichen optischen Voraussetzungen testen zu können.

Besonders von Vorteil ist bei dem erfindungsgemäßen Testsystem, dass die technischen Möglichkeiten, die der Fahrzeugprüfstand bietet, aktiv oder passiv in den Test der fahrzeugführerspezifischen Signalwahrnehmung und -reaktion einbezogen werden können. Hierzu ist es besonders günstig, wenn der Fahrzeugprüfstand wenigstens eine Antriebsvorrichtung für einen Antrieb wenigstens eines Rades des Kraftfahrzeuges und/oder wenigstens eine Bremsvorrichtung für eine Abbremsung wenigstens eines Rades des Kraftfahrzeuges aufweist. So können mit dem Fahrzeugprüfstand beispielsweise verschiedene Antriebs- oder Bremsvorgänge genutzt werden, um bestimmte Fahrbahnverhältnisse, wie abschüssige Straßen, oder eine Aufprallsituation zu simulieren, um die Reaktion des Fahrzeugführers hierauf testen zu können. Der fahrzeugprüfstand kann beispielsweise so gestaltet sein, dass alle Räder des Kraftfahrzeuges einzeln angetrieben, beispielsweise bis auf 140 km/h, und abgebremst werden können. In einer weiteren optionalen Gestaltung des erfindungsgemäßen Testsystems kann der Fahrzeugprüfstand auch eine Fahrzeugheckverschiebeeinrichtung und/oder ein Schwenkaggregat für das Kraftfahrzeug aufweisen. Hierdurch können beispielsweise Schleudervorgänge des Kraftfahrzeuges, zum Beispiel in einer Unfallsituation, simuliert werden, um die Reaktion des Fahrzeugführers darauf zu testen. Beispielsweise kann der Fahrzeugprüfstand zur Simulation von Schleudervorgängen so ausgebildet sein, dass mit seiner Fahrzeugheckverschiebeeinrichtung eine Verschiebung des Fahrzeughecks bis zu 80 cm Auslenkung möglich ist. Mit der auf dem Fahrzeugprüfstand vorgesehenen Fahrzeugheckverschiebeeinrichtung schleudert nicht das Heck des Kraftfahrzeuges über der Fahrbahn, sondern die durch den Fahrzeugprüfstand simulierte "Fahrbahn" schleudert das stehende Fahrzeugheck.

In einer nächsten Variante des erfindungsgemäßen Testsystems weist der Fahrzeugprüfstand eine Einrichtung zur Radentlastung wenigstens eines Rades des Kraftfahrzeuges auf. Dadurch können beispielsweise Fahrbahnen mit unterschiedlichen Oberflächeneigenschaften und/oder Höhen des Fahrbahnbelages auf der Fahrbahn simuliert werden, wobei auch hierauf die Reaktion des Fahrzeugführers getestet werden kann. Durch die Einrichtung zur Radentlastung können unter anderem auch Längs- oder Querrillen einer Fahrbahn nachgebildet werden. Weitere Möglichkeiten, bestimmte Fahrsituationen in dem erfindungsgemäßen Testsystem nachzustellen, ergeben sich, wenn der Fahrzeugprüfstand Rollen mit variierbaren, unterschiedlichen Straßenbelägen entsprechenden Oberflächenstrukturen aufweist.

Die Aufgabe wird darüber hinaus durch ein Konfigurationssystem zur fahrzeugführerspezifischen Konfiguration wenigstens einer Fahrzeugführer-System-Schnittstelle wenigstens eines technischen Fahrsicherheits-, Begleit-, Führungs- und/oder Assistenzsystems eines Kraftfahrzeuges, gelöst, wobei das Konfigurationssystem wenigstens eine Ausführungsform des erfindungsgemäßen Testsystems und wenigstens ein Prüf- und/oder Einrichtungsmodul für die wenigstens eine Fahrzeugführer-System-Schnittstelle aufweist. Mit Hilfe des erfindungsgemäßen Testsystems kann, wie oben beschrieben, wenigstens eine Reaktionszeit des Fahrzeugführers auf wenigstens eines der mit der wenigstens einen Signaleinheit ausgegebenen Signale erfasst werden. Die wenigstens eine erfasste Reaktionszeit ist also wenigstens ein Wert, anhand dessen die fahrzeug- und/oder fahrzeugführerspezifische Signalwahrnehmung und -reaktion eingeordnet werden kann. Daraufhin kann in dem erfindungsgemäßen Konfigurationssystem die wenigstens eine Fahrzeugführer-System-Schnittstelle des wenigstens eines technischen Fahrsicherheits-, Begleit-, Führungs- und/oder Assistenzsystems des Kraftfahrzeuges an die wenigstens eine erfasste Reaktionszeit angepasst werden. Das heißt, mit Hilfe der Fahrzeugführer-System-Schnittstelle können Einstellungen an dem Fahrsicherheits-, Begleit-, Führungs- und/oder Assistenzsystems des Kraftfahrzeuges vorgenommen werden, die eine gegebenenfalls verminderte Fähigkeit zur Signalwahrnehmung und -reaktion des Fahrzeugführers berücksichtigen und dieser vorzugsweise entgegenwirken und/oder durch Zuschaltung weiterer oder anderer Signale die Situationswahrnehmung und -reaktion des Fahrzeugführers verbessern.

Das erfindungsgemäße Konfigurationssystem nutzt eine die Messeinrichtung des erfindungsgemäßen Testsystems und ein softwarebasiertes Einrichtungsmodul aufweisende Konfigurationsausrüstung, welche unterschiedliche, definierten Verkehrssituationen entsprechende Konfigurationsszenarien vorzugsweise mit einem einheitlichen Zeitstempel einstellen kann.

Die oben aufgeführten Eigenschaften und Vorteile des erfindungsgemäßen Testsystems gelten auch für das erfindungsgemäße Konfigurationssystem, in welchem das erfindungsgemäße Testsystem integriert ist.

In Ausführungsformen des erfindungsgemäßen Konfigurationssystems kann das wenigstens eine Begleitsystem wenigstens eine Motormanagementeinstelleinrichtung, eine Motorgeräuscheinstelleinrichtung, eine Fahrwerksabstimmeinrichtung, eine Verkehrsinformationsausgabeeinrichtung, ein Navigationsgerät, ein Telefon, eine Sitzverstelleinrichtung, eine Lenkradverstelleinrichtung und/oder eine Spiegelverstelleinrichtung des Kraftfahrzeuges aufweisen, und/oder kann das wenigstens eine Führungssystem ein Antiblockiersystem, ein Antischlupfregelungssystem und/oder eine Einparkhilfe aufweisen, und/oder kann das wenigstens eine Assistenzsystem ein Bremsassistenzsystem, ein Spurhalteassistenzsystem und/oder ein Abstandsassistenzsystem aufweisen. Besonders von Vorteil ist es, wenn in einem Ausführungsbeispiel des erfindungsgemäßen Konfigurationssystems das Einstellmodul und/oder die Signaleinheit mit einer Datenerfassungs- und/oder Auswerteeinheit gekoppelt ist oder sind, und die Datenerfassungs- und/oder Auswerteeinheit mit dem wenigstens einen Prüf- und/oder Einrichtungsmodul gekoppelt ist. Über die Datenerfassungs- und/oder Auswerteeinheit können erfasste Reaktionszeiten gespeichert oder zwischengespeichert, mit zu anderen Signalen erfassten Reaktionszeiten logisch verknüpft, ausgewertet, geordnet und/oder in Steuersignale für das wenigstens eine Prüf- und/oder Einrichtungsmodul der wenigstens einen Fahrzeugführer-System-Schnittstelle umgewandelt werden.

Die Aufgabe wird ferner durch ein Testverfahren der oben genannten Gattung gelöst, welches ein Testverfahren zum Test einer fahrzeugführerspezifischen Signalwahrnehmung und -reaktion ist, wobei das Kraftfahrzeug zumindest teilweise durch einen Fahrzeugführer bedient wird; durch wenigstens eine Messeinrichtung direkt oder indirekt wenigstens eine Reaktionszeit des Fahrzeugführers auf das wenigstens eine Signal erfasst wird; durch eine Datenerfassungs- und/oder Auswerteeinheit wenigstens eine erfasste Reaktionszeit mit einer Soll-Reaktionszeit verglichen wird; dann, wenn die Reaktionszeit die Soll-Reaktionszeit um mehr als einen vorgegebenen und/oder erlaubten Toleranzbetrag überschreitet, mit wenigstens einem Einstellmodul an der wenigstens einen Signaleinheit wenigstens eine Ausgabeintensität und/oder wenigstens eine Signalart und/oder wenigstens eine Stellgröße für einen Aktor eines Assistenzsystems des Kraftfahrzeuges derart eingestellt wird, dass die Reaktionszeit verkleinert wird; und iterativ mit dem wenigstens einen Einstellmodul die wenigstens eine Ausgabeintensität und/oder die wenigstens eine Signalart der wenigstens einen Signaleinheit so lange geändert wird, bis die erfasste Reaktionszeit der Soll-Reaktionszeit entspricht und/oder die erfasste

Reaktionszeit im vorgegebenen oder erlaubten Toleranzbereich liegt.

Das erfindungsgemäße Testverfahren besitzt den Vorteil, dass es auf einem Fahrzeugprüfstand ausgeführt wird, auf dem zwar das Fahrzeug betreiben und mit dem realitätsnahe Fahrsituationen nachstellbar sind, auf dem sich aber keine reale Gefahrensituation für den Fahrzeugführer ergibt. Ein weiterer Vorteil des erfindungsgemäßen Testverfahrens besteht darin, dass es in einer begrenzten Räumlichkeit ausgeführt werden kann und trotzdem realitätsnah eine Vielzahl von Tests des Fahrzeugführers hinsichtlich seiner fahrzeugführerspezifischen Signalwahrnehmung und -reaktion ausgeführt werden kann. Dabei kann als Fahrzeugprüfstand sowohl ein herkömmlicher Fahrzeugprüfstand als auch ein Fahrzeugprüfstand mit erweiterter Variabilität zur Simulation unterschiedlicher Fahrbedingungen genutzt werden.

Durch die wenigstens eine Signaleinheit können, wie bereits oben erläutert, verschiedenste optische und/oder akustische und/oder haptische Signale ausgegeben werden, mit deren Hilfe verschiedene Fahrsituationen und/oder bestimmte Umwelteinflüsse und/oder Fahrbetrieb oder Effekte am Kraftfahrzeug simuliert werden können. Mit der wenigstens einen Messeinrichtung wird dann erfasst, ob, wie und mit welcher Reaktionszeit der Fahrzeugführer auf das wenigstens eine Signal reagiert.

Das Testverfahren wird so ausgeführt, dass dann, wenn die erfasste Regelgröße die Soll-Regelgröße und/oder die erfasste Reaktionszeit die Soll-Reaktionszeit um mehr als einen vorgegebenen und/oder erlaubten Toleranzbetrag überschreitet, mit wenigstens einem Einstellmodul an der wenigstens einen Signaleinheit wenigstens eine Ausgabeintensität und/oder wenigstens eine Signalart und/oder wenigstens eine Stellgröße für einen Aktor eines Assistenzsystems des Kraftfahrzeuges derart eingestellt wird, dass die Regelgröße in ein erlaubtes und/oder vorgegebenes Toleranzband zurückgeführt und/oder die Reaktionszeit verkleinert wird.

Wenn sich beispielsweise bei dem Vergleich der jeweils erfassten Reaktionszeit mit der Soll-Reaktionszeit ein Toleranzbetrag in Form eines Reaktionszeit-Differenzbetrages ergibt, erfolgt eine Einstellung der wenigstens einen Signaleinheit. Die Einstellung der wenigstens einen Signaleinheit wird dabei so vorgenommen, dass die Ausgabeintensität und/oder die Signalart der Signaleinheit und/oder wenigstens eine Stellgröße für einen Aktor eines Assistenzsystems des Kraftfahrzeuges derart verändert wird, dass die Reaktionszeit verkleinert und damit optimiert wird.

Bei dem erfindungsgemäßen Testverfahren kann unter anderem ermittelt werden, auf welchem Kommunikationsweg, das heißt, über den akustischen, visuellen und/oder haptischen Kommunikationsweg, der Fahrzeugführer am geeignetsten Informationen während des Fahrens erfassen kann. Zudem können situationsgerechte Maximalinformationsmengen, also die Menge an Informationen, die der Fahrzeugführer pro Zeit sicher verarbeiten und darauf reagieren kann, für den jeweiligen Fahrzeugführer ermittelt werden.

Im Ergebnis des erfindungsgemäßen Testverfahrens stehen somit vorteilhafte Einstellungsparameter der wenigstens einen Signaleinheit zur Verfügung, bei deren Einstellung eine optimale fahrzeugführerspezifische Signalwahrnehmung und -reaktion zu erwarten ist. Da in dem erfindungsgemäßen Testverfahren ein erfindungsgemäßes Testsystem, wie oben beschrieben, zum Einsatz kommt, wird hiermit hinsichtlich des Testverfahrens zur Vermeidung von Wiederholungen auf die weiteren, bezüglich des Testsystems oben beschriebenen Eigenschaften und Vorteile vollumfänglich verwiesen.

Das erfindungsgemäße Testverfahren wird so ausgeführt, dass iterativ mit dem wenigstens einen Einstellmodul die wenigstens eine Ausgabeintensität und/oder die wenigstens eine Signalart der wenigstens einen Signaleinheit so lange geändert wird, bis die erfasste Reaktionszeit der Soll-Reaktionszeit entspricht oder diese unterschritten hat. So ermöglicht es das erfindungsgemäße Testverfahren, beispielsweise die Ausgabeintensität von Warnanzeigen und/oder die Häufigkeit von Informations- oder Warnanzeigen pro Zeitintervall fahrzeugführerspezifisch einzustellen.

Da gerade beim Führen eines Kraftfahrzeuges die optische Wahrnehmung des Fahrzeugführers von dem Verkehrsgeschehen überwiegend dessen Fahrverhalten beeinflusst, ist es besonders sinnvoll, wenn in einer Ausbildung des erfindungsgemäßen Testverfahrens die wenigstens eine Signaleinheit ein Verkehrsgeschehen und/oder eine Störgröße visualisiert. Diese Visualisierung kann beispielsweise, wie oben bereits erläutert, mit Hilfe eines Bildschirmes oder einer Bildprojektionseinrichtung umgesetzt werden.

Die Signale der Signaleinheit, anhand welcher dem Fahrzeugführer das Verkehrsgeschehen vermittelt wird, wirken in unterschiedlicher Weise auf den Fahrzeugführer. Dies wird in einer Weiterbildung des erfindungsgemäßen Testverfahrens genutzt, in dem durch die wenigstens eine Signaleinheit wenigstens zwei unterschiedliche Signale zeitgleich ausgegeben werden, signalabhängig die erfassten Regelgrößen mit zugehörigen, in der Datenerfassungs- und/oder Auswerteeinheit hinterlegten Soll-Regelgrößen und/oder die erfassten Reaktionszeiten mit zugehörigen, in der Datenerfassungs- und/oder Auswerteeinheit hinterlegten Soll-Reaktionszeiten verglichen werden und bei Ermittlung wenigstens eines Toleranzbetrages zwischen den erfassten Regelgrößen und den Soll-Regelgrößen und/oder zwischen den erfassten Reaktionszeiten und den Soll-Reaktionszeiten die wenigstens eine Signaleinheit so eingestellt wird, dass das Signal, welches von den zeitgleich ausgegebenen Signalen die höhere Sicherheitsrelevanz besitzt, verstärkt und/oder länger und/oder in häufigeren Ausgabeintervallen als das Signal mit der geringeren Sicherheitsrelevanz ausgegeben wird und/oder vorrangig dem Fahrzeugführer übermittelt wird, und/oder das Signal, welches von den zeitgleich ausgegebenen Signalen die niedrigere Sicherheitsrelevanz besitzt, unterdrückt oder mit geringerer Ausgabeintensität und/oder kürzer und/oder in weniger häufigen Ausgabeintervallen als das Signal mit der höheren Sicherheitsrelevanz ausgegeben wird. Durch die zeitgleich mit den wenigstens zwei unterschiedlichen Signalen bereitgestellten Informationen, welche durch den Fahrzeugführer verarbeitet werden müssen, ist es möglich, die individuelle Handlungsgrenze des Fahrzeugführers für verschiedene Fahrsituationen zu ermitteln. In der Folge kann eine Begrenzung der Signale bzw. der Signale der Signaleinheit, mit welchen der Fahrzeugführer beim Fahren beispielsweise durch Begleit-, Führungs- und/oder Assistenzsysteme des Kraftfahrzeuges konfrontiert wird, auf sicherheitsrelevante Meldungen, gegebenenfalls unterstützt durch personalisierte Anzeigen, vorgenommen werden.

Je nach Fahrzeugführer werden bei dem erfindungsgemäßen Testverfahren unterschiedliche Reaktionszeiten ermittelt, die unterschiedlichen fahrzeugführerspezifischen Daten, also Daten, die das Reaktionsverhalten des jeweiligen Fahrzeugführers charakterisieren, zugeordnet werden können. Diese fahrzeugführerspezifischen Daten können bei dem erfindungsgemäßen Testverfahren in der Datenerfassungs- und/oder Auswerteeinheit ermittelt und/oder hinterlegt werden. In einer Ausführungsform der vorliegenden Erfindung kann bei solchen Voraussetzungen die Signalausgabe der Signaleinheit in Abhängigkeit von mit der Datenerfassungs- und/oder Auswerteeinheit ermittelten und/oder darin hinterlegten fahrzeugführerspezifischen Daten in nacheinander ablaufenden Testzyklen verändert werden. Auf diese Weise können die Signalausgabe optimal an die Wahrnehmungsfähigkeiten und Reaktionsfähigkeiten des jeweiligen Fahrzeugführers angepasst werden.

Die Signale der Signaleinheit, bei welchen der Fahrzeugführer am geeignetsten reagiert, sind bei dem erfindungsgemäßen Testverfahren vorzugsweise derart festzuhalten, dass sie nachfolgend zur Konfiguration von Komponenten des Kraftfahrzeuges verwendet werden können. Daher ist es in einer Ausführungsform des erfindungsgemäßen Testverfahrens vorgesehen, dass wenigstens ein Signal, bei dem die die erfasste Regelgröße wenigstens einem in der Datenerfassungs- und/oder Auswerteeinheit hinterlegten Regelgrößen-Sollwert entspricht und/oder die erfasste Reaktionszeit des Fahrzeugführers wenigstens einem in der Datenerfassungs- und/oder Auswerteeinheit hinterlegten Reaktions-Sollwert entspricht oder diesen unterschreitet, fahrzeugführerbezogen in einem Steuergerät des Kraftfahrzeuges gespeichert wird.

Um Speicherplatz zu sparen und in dem erfindungsgemäßen Testverfahren ermittelte Ergebnisse schnell abrufbereit zur Verfügung stellen zu können, ist es des Weiteren von Vorteil, wenn in einer Ausführungsform des erfindungsgemäßen Testverfahrens die Datenerfassungs- und/oder Auswerteeinheit eine Logik aufweist, die erfassten Regelgrößen und/oder die erfassten Reaktionszeiten und/oder Signale der Signaleinheit zu Gesamtinformationen für den Fahrzeugführer verdichtet oder konzentriert. Mit der Logik können Informationen für den Fahrzeugführer innerhalb eines Durchlaufes definierter Verkehrssituationen verdichtet werden. Ferner ist es mit der Logik möglich, eine Konzentration zur Eingrenzung gleichzeitig vom Kraftfahrzeug abgegebener Informationen durchzuführen.

Das erfindungsgemäße Testverfahren eröffnet die Möglichkeit, die technischen Voraussetzungen des Fahrzeugprüfstandes, des Kraftfahrzeuges als auch der wenigstens einen Signaleinheit miteinander zu nutzen, um ein Verkehrsgeschehen möglichst realitätsnah abbilden zu können. Um diese Möglichkeiten effektiv nutzen zu können, ist in einer Variante des erfindungsgemäßen Verfahrens der Einsatz einer Einstellsystemsteuerung vorgesehen, mit der der Fahrzeugprüfstand, das Kraftfahrzeug und die wenigstens eine Signaleinheit gleichzeitig gesteuert werden.

Mit der Einstellsystemsteuerung können beispielsweise in einem Trainingsablauf Signale der Signaleinheit geändert werden, bis Signale ermittelt sind, bei welchen wenigstens eine erfasste Regelgröße der Soll-Regelgröße und/oder eine erfasste Reaktionszeit des Fahrzeugführers der Soll-Reaktionszeit entspricht oder diese unterschreitet.

Die Aufgabe wird außerdem durch ein Konfigurationsverfahren zur fahrzeugführerspezifischen Konfiguration wenigstens einer Fahrzeugführer-System-Schnittstelle eines technischen Fahrsicherheits-, Begleit-, Führungs- und/oder Assistenzsystems eines Kraftfahrzeuges gelöst, wobei in dem Konfigurationsverfahren wenigstens eine Ausführungsform des erfindungsgemäßen Testverfahrens verwendet wird und mit wenigstens einem Prüf- und/oder Einrichtungsmodul wenigstens ein sich aus einer Einstellung der Fahrzeugführer-System-Schnittstelle ergebendes Signal des der Fahrzeugführer-System-Schnittstelle zuzuordnenden technischen Fahrsicherheits-, Begleit-, Führungs- und/oder Assistenzsystems mit wenigstens einer Signaleinstellung der wenigstens einen Signaleinheit verglichen und bei einer Abweichung die Einstellung der Fahrzeugführer-System-Schnittstelle solange verändert wird, bis eine Übereinstimmung zwischen der Signaleinstellung der wenigstens einen Signaleinheit und dem Signal des der Fahrzeugführer-System-Schnittstelle zuzuordnenden technischen Fahrsicherheits-, Begleit-, Führungs- und/oder Assistenzsystems erzielt ist.

Das erfindungsgemäße Konfigurationsverfahren nutzt die in dem erfindungsgemäßen Testverfahren ermittelten Daten, um darauf basierend das wenigstens eine technische Begleit-, Führungs- und/oder Assistenzsystem des Kraftfahrzeuges im Hinblick auf die Erfordernisse des Fahrzeugführers für eine schnelle und sichere Wahrnehmung und Reaktion auf das Verkehrsgeschehen zu prüfen und gegebenenfalls anzupassen. Die Prüfung und/oder Einstellung des technischen Fahrsicherheits-, Begleit-, Führungs- und/oder Assistenzsystems erfolgt hierbei über die wenigstens eine Fahrzeugführer-System-Schnittstelle. Dabei wird mit dem Prüf- und/oder Einrichtungsmodul ein Vergleich der Einstellung der Fahrzeugführer-System-Schnittstelle und wenigstens einem sich daraus ergebenden Signal des der Fahrzeugführer-System-Schnittstelle zuzuordnenden technischen Fahrsicherheits-, Begleit-, Führungs- und/oder Assistenzsystems mit wenigstens einer der Signaleinstellungen der wenigstens einen Signaleinheit vorgenommen. Ergeben sich bei diesem Vergleich Abweichungen, erfolgt eine Einstellungsänderung der Fahrzeugführer-System-Schnittstelle durch das Prüf- und/oder Einrichtungsmodul, bis eine Übereinstimmung zwischen der Signaleinstellung der wenigstens einen Signaleinheit und dem Signal des der Fahrzeugführer-System-Schnittstelle zuzuordnenden technischen Fahrsicherheits-, Begleit-, Führungs- und/oder Assistenzsystems erzielt ist. Während des erfindungsgemäßen Konfigurationsverfahrens verbleibt der Fahrzeugführer in seinem gewohnten Kraftfahrzeug und erlebt die Anpassung der technischen Fahrsicherheits-, Begleit-, Führungs- und/oder Assistenzsysteme des Kraftfahrzeuges für unterschiedliche Verkehrsszenarien durch ein Kopplungsschema von einem durch die wenigstens eine Signaleinheit hervorgerufenen Fahreindruck und durch das Kraftfahrzeug und den Fahrzeugprüfstandsänderungen bestimmter Aktion und Reaktion.

Die oben aufgeführten Eigenschaften und Vorteile des erfindungsgemäßen Testverfahrens gelten auch für das erfindungsgemäße Konfigurationsverfahren, in welchem das erfindungsgemäße Testverfahren integriert ist.

In einer vorteilhaften Ausgestaltung des erfindungsgemäßen Konfigurationsverfahrens werden wenigstens zwei auf unterschiedlichen Kommunikationswegen durch den Fahrzeugführer registrierbare Signale durch die wenigstens eine Signaleinheit ausgegeben, und durch eine Datenerfassungs- und/oder Auswerteeinheit wird ausgewertet, auf welchem Kommunikationsweg, das heißt, auf akustischem oder visuellem oder haptischem Weg, der Fahrzeugführer am schnellsten oder am geeignetsten auf das jeweilige Signal reagiert, und daraufhin wird die wenigstens eine Fahrzeugführer-System-Schnittstelle, die auf diesem Kommunikationsweg basiert, so eingestellt, dass das der Fahrzeugführer-System-Schnittstelle zugehörige Fahrsicherheits-, Begleit-, Führungs- und/oder Assistenzsystem gegenüber anderen Fahrsicherheits-, Begleit-, Führungs- und/oder Assistenzsystemen des Kraftfahrzeuges favorisiert dieses Signal oder Meldungen zu diesem Signal an den Fahrzeugführer übermittelt.

In bevorzugten Varianten des erfindungsgemäßen Konfigurationsverfahrens wird beim Einstellen der wenigstens einen Fahrzeugführer-System-Schnittstelle eine Ausgabeintensität und/oder eine Signalamplitude und/oder eine Helligkeit und/oder eine Farbe wenigstens einer Warnanzeige und/oder eine Frequenz und/oder eine Geschwindigkeit und/oder eine Informationsdichte von Informations- und/oder Warnanzeigen des wenigstens einen Fahrsicherheits-, Begleit-, Führungs- und/oder Assistenzsystems des Kraftfahrzeuges eingestellt.

Vorzugsweise wird beim Einstellen der wenigstens eine Fahrzeugführer-System-Schnittstelle eine Ansprechschwelle einer Antiblockierregelung und/oder eine Ansprechschwelle einer Antischlupfregelung und/oder eine Spurbreitengrenze eines Spurhalteassistenzsystems und/oder eine Ansprechschwelle eines Bremsassistenzsystems und/oder eine Abstandsuntergrenze eines Abstandsassistenzsystems und/oder eine Geschwindigkeitsobergrenze des Kraftfahrzeuges und/oder eine Leistungsobergrenze des Kraftfahrzeuges eingestellt.

Mit den Ausführungsformen des erfindungsgemäßen Testsystems, des erfindungsgemäßen Konfigurationssystems, des erfindungsgemäßen Testverfahrens und des erfindungsgemäßen Konfigurationsverfahrens stehen Prüf- und Konfigurationsmittel zur Verfügung, mit welchen die in einem Kraftfahrzeug vorhandenen technischen Begleit-, Führungs- und/oder Assistenzsysteme zu einem personalisierten Mobilitätssystem verknüpft werden können. Die erfindungsgemäßen Test- und Konfigurationssysteme sowie die erfindungsgemäßen Test- und Konfigurationsverfahren basieren auf einem mechanisch einfach konzipierbarem Fahrzeugprüfstand mit entsprechender Test- und/oder Konfigurationssoftware, auf welchem auf Grundlage von realistischen Verkehrsszenarien der Fahrzeugführer im Umgang mit technischen Fahrsicherheits-, Begleit-, Führungs- und/oder Assistenzsystemen trainiert werden kann und weiterführend die Interaktion des Fahrzeugführers mit diesen technischen Fahrsicherheits-, Begleit-, Führungs- und/oder Assistenzsystemen personenbezogen konfiguriert werden kann. Die vorliegende Erfindung ermöglicht es somit, die Reaktionen des Fahrzeugführers auf vorgegebene Fahrmanöver realitätsnah zu erfassen und die Signalausgabe bzw. Signaldarstellung individuell auf den jeweiligen Fahrzeugführer abzustimmen.

Bevorzugte Ausführungsformen der vorliegenden Erfindung, deren Aufbau, Funktion und Vorteile werden im Folgenden anhand von Figuren näher erläutert, wobei
- Figur 1: schematisch eine Ausführungsform eines erfindungsgemäßen Konfigurationssystem mit einer Ausführungsform eines erfindungsgemäßen Testsystems, an der das erfindungsgemäße Konfigurations- und das erfindungsgemäße Testverfahren ausgeführt werden kann, in einer perspektivischen Ansicht mit Blick auf ein Kraftfahrzeug von vorn und rechts zeigt;
- Figur 2: schematisch das Konfigurationssystem aus Figur 1 in einer Draufsicht zeigt;
- Figur 3: schematisch eine weitere Ausführungsform eines erfindungsgemäßen Konfigurationssystems mit einer Ausführungsform eines erfindungsgemäßen Testsystems, an der das erfindungsgemäße Konfigurations- und das erfindungsgemäße Testverfahren ausgeführt werden kann, in einer perspektivischen Ansicht mit Blick auf ein Kraftfahrzeug von hinten und links zeigt; und
- Figur 4: schematisch eine Grundkonstruktion eines Fahrzeugprüfstandes einer Ausführungsform des erfindungsgemäßen Konfigurationssystem bzw. des erfindungsgemäßen Testsystems in einer perspektivischen Explosivdarstellung zeigt

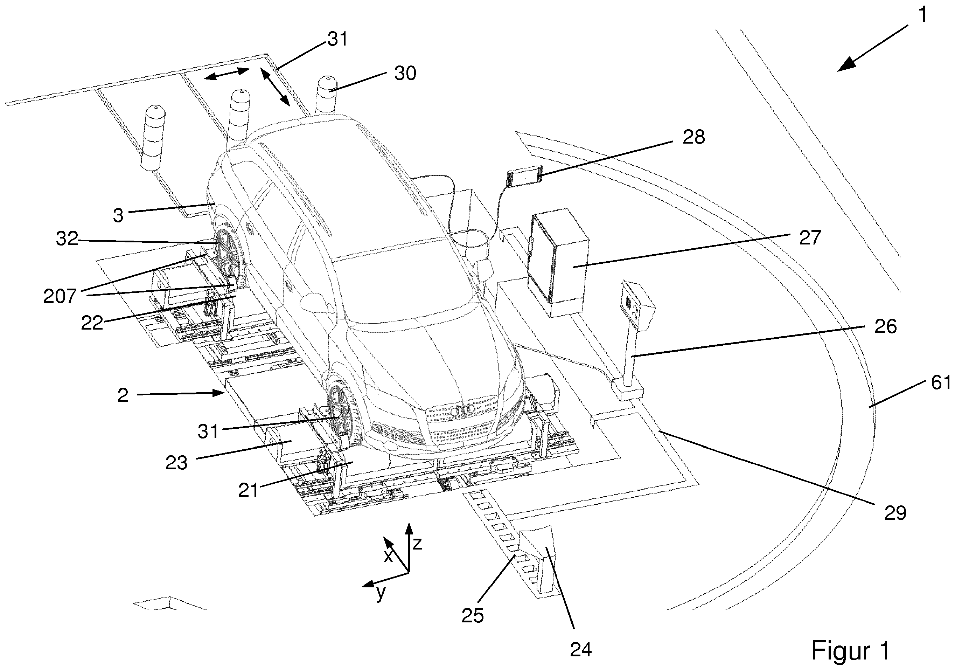

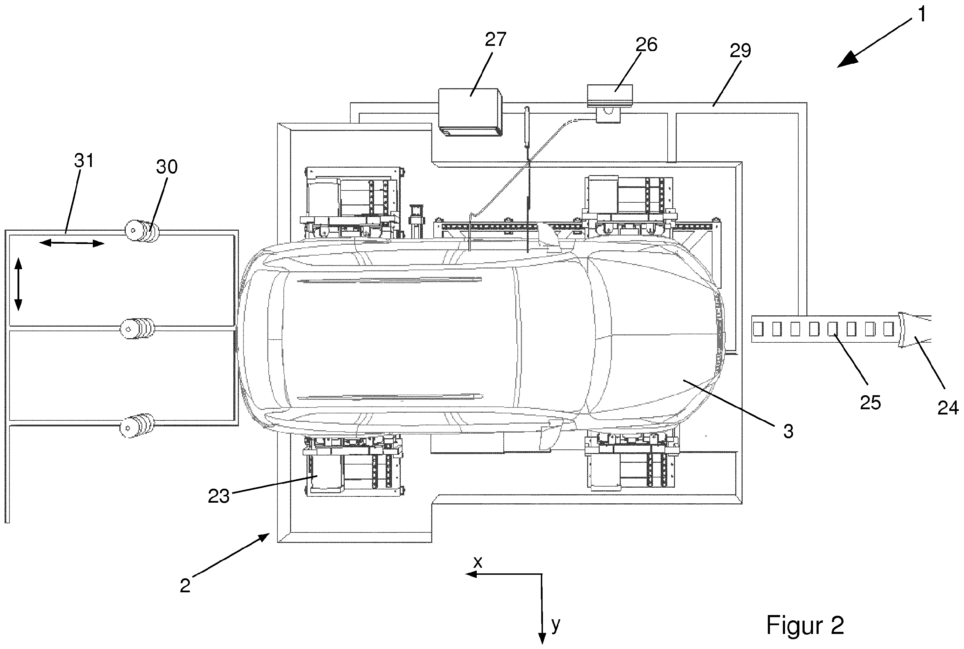

Die Figuren 1 und 2 zeigen eine Ausführungsform eines erfindungsgemäßen Konfigurationssystems 1 mit einer Ausführungsform eines erfindungsgemäßen Testsystems. Im Folgenden wird unter der x-Richtung die Längsausrichtung eines Kraftfahrzeuges 3, das heißt von dessen Front zu dessen Heck, verstanden; die y-Richtung ist die Breitenrichtung des Kraftfahrzeuges 3, das heißt von der linken zur rechten Fahrzeugseite; und unter der z-Richtung ist die vertikale Ausrichtung des Kraftfahrzeuges 3 und/oder von Komponenten des Fahrzeugprüfstandes 2 zu verstehen.

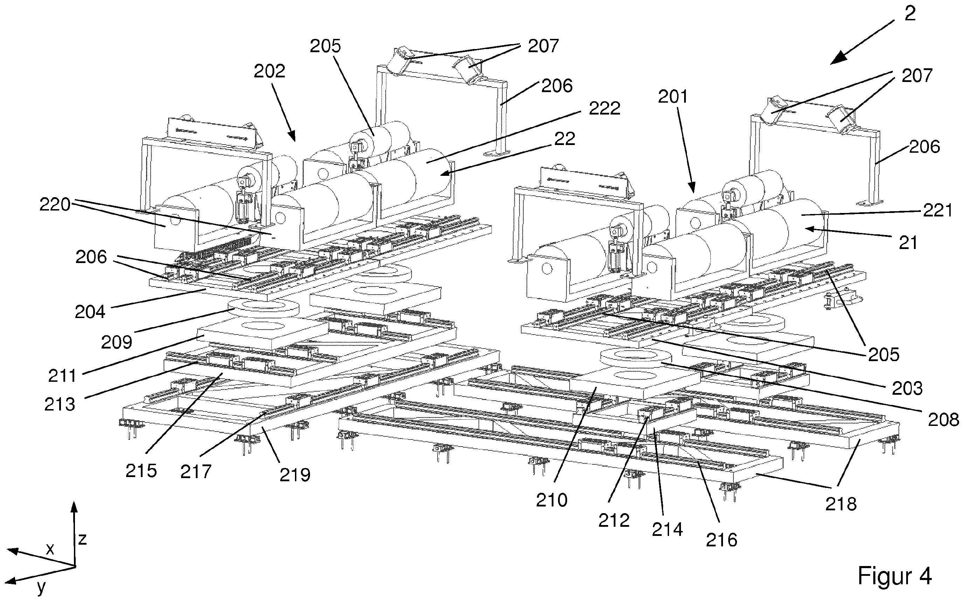

Das Konfigurationssystem 1 weist einen Fahrzeugprüfstand 2 auf, auf dem ein Kraftfahrzeug 3 steht. Der Fahrzeugprüfstand 2 kann beispielsweise wie in Figur 4 gezeigt oder auch anders ausgebildet sein. Hinsichtlich des Kraftfahrzeuges 3 kommen alle denkbaren Kraftfahrzeuge in Betracht. Das Kraftfahrzeug 3 wird von einem in Figur 1 nicht gezeigten Fahrzeugführer bedient.

Das Kraftfahrzeug 3 weist wenigstens ein technisches Begleit-, Führungs- und/oder Assistenzsystem, das mit dem erfindungsgemäßen Konfigurationssystem 1 testbar und auf die speziellen Bedürfnisse des das Kraftfahrzeug 3 führenden Fahrzeugführers einstellbar ist.

Als Begleitsystem kann das Kraftfahrzeug 3 wenigstens eine Motormanagementeinstelleinrichtung, eine Motorgeräuscheinstelleinrichtung, eine Fahrwerksabstimmeinrichtung, eine Verkehrsinformationsausgabeeinrichtung, ein Navigationsgerät, ein Telefon, eine Sitzverstelleinrichtung, eine Lenkradverstelleinrichtung und/oder eine Spiegelverstelleinrichtung aufweisen. Als Führungssystem kann das Kraftfahrzeug 3 ein Antiblockiersystem, ein Antischlupfregelungssystem und/oder eine Einparkhilfe aufweisen. Als Assistenzsystem kann das Kraftfahrzeug 3 ein Bremsassistenzsystem, ein Spurhalteassistenzsystem und/oder ein Abstandsassistenzsystem aufweisen.

Bei dem in den Figuren 1 und 2 gezeigten Konfigurationssystem 1 weist der Fahrzeugprüfstand 2 sowohl unter den Vorderrädern 31 als auch unter den Hinterrädern 32 des Kraftfahrzeuges 3 Prüfrollen 21, 22 auf. Die Prüfrollen 21, 22 dienen dem Antrieb und Abbremsen der Räder 31, 32 des Kraftfahrzeuges 3. Hierfür sind an den Prüfrollen 21, 22 Antriebsvorrichtungen und Bremsvorrichtungen vorgesehen.

Zusätzlich weist der Fahrzeugprüfstand 2 vor und hinter jedem Rad 31, 32 des Kraftfahrzeuges 3 angeordnete Sicherheitsrollen 207 zum Verhindern eines Ausbrechens des Kraftfahrzeuges 3 auf. Die Grundkonstruktion des Fahrzeugprüfstandes 2 weist zudem eine Fahrzeugheckverschiebeeinrichtung und ein Schwenkaggregat für das Kraftfahrzeug auf. Ferner kann der Fahrzeugprüfstand 2 eine Einrichtung zur Radentlastung wenigstens eines Rades 31, 32 des Kraftfahrzeuges 3 aufweisen. Außerdem befindet sich bei dem Fahrzeugprüfstand 2 an jeder der die Prüfrollen 21, 22 aufweisenden Prüfrollenanordnungen 201, 202 eine Kühlungsvorrichtung 23. Weitere Komponenten der Grundkonstruktion des Fahrzeugprüfstandes 2 sind im Hinblick auf Figur 4 unten erläutert, wobei hier zahlreiche Modifikationen möglich sind.

Das Konfigurationssystem 1 weist ferner eine durch unterschiedliche Komponenten ausgebildete Testumgebung auf. Die Testumgebung umfasst wenigstens eine, in oder an dem Fahrzeugprüfstand 2 und/oder in oder an dem Kraftfahrzeug 3 und/oder separat von dem Fahrzeugprüfstand 2 und dem Kraftfahrzeug 3 vorgesehene Signaleinheit, mit welcher wenigstens ein optisches und/oder akustisches und/oder haptisches, fahrsituationsbezogenes und/oder umweltbezogenes und/oder fahrzeugbetriebsspezifisches Signal ausgeb- oder anzeigbar und/oder manipulierbar ist. Als Beispiel für eine solche Signaleinheit in Figur 1 ein im und um den Sichtbereich des Fahrzeugführers des Kraftfahrzeuges 3 angeordneter Bildschirm 61 gezeigt. Der Bildschirm 61 ist in dem gezeigten Ausführungsbeispiel eine sich in einem Abstand zu dem Kraftfahrzeug 3 in einem Bogen um die Front des Kraftfahrzeuges 3 erstreckende Leinwand, auf die mit einer nicht gezeigten Bildprojektionseinrichtung ein Bild oder ein Film, mit dem eine Verkehrssituation visualisiert wird, projiziert wird. dabei liegt wenigstens ein Teil der Bildwiedergabefläche des Bildschirmes 61 und/oder der Bildprojektionseinrichtung in einem Sichtfeld des Fahrzeugführers der Kraftfahrzeuges 3. Mit dem Sichtfeld ist hier nicht nur das direkte Sichtfeld, sondern auch das über Spiegel und/oder eine Fahrzeugkamera einsehbare Sichtfeld des Fahrzeugführers gemeint. Wie oben bereits erwähnt, kann hier anstelle des Fahrzeugführers auch ein Fahrzeugführersimulator vorgesehen sein. Der Bildschirm 61 kann in anderen Ausführungsformen der Erfindung auch ein Display sein. Es können auch mehrere Bildschirme und/oder Displays, deren Größe und/oder Form variabel ist, um oder an dem Fahrzeugprüfstand 2 vorgesehen sein.

Mit der visuellen Bildschirmanzeige ist vorzugsweise auch eine akustische Signalanzeige der Verkehrssituation verknüpft, sodass das auf dem Bildschirm 61 oder Display abgebildete Verkehrsgeschehen realitätsgetreu wiedergegeben werden kann.

Außerdem weist der Fahrzeugprüfstand 2 eine Einstellsystemsteuerung 26 auf. Über die Einstellsystemsteuerung 26 können Komponenten des Fahrzeugprüfstandes 2 bewegt werden, sodass eine reale Fahrsituation nachgebildet werden kann. Mit der Einstellsystemsteuerung 26 können insbesondere Antriebs- und Bremsvorrichtungen für die Prüfrollen 21, 22 angesteuert werden. Ferner können die unten noch näher erläuterten X- und Y-Schlitten des Fahrzeugprüfstandes 2 in x- und y-Richtung und entgegen der x- und der y-Richtung bewegt und in der x-y-Ebene des Fahrzeugprüfstandes 2 verschwenkt werden.

Die Einstellsystemsteuerung 26 ist über Datenleitungen 29 mit einer Datenerfassungs- und/oder Auswerteeinheit 27, die eine Logik enthält, verbunden. Mit der Logik können mit dem Konfigurationsystem 1 erfasste Reaktionszeiten und/oder Signale zu Gesamtinformationen für den Fahrzeugführer verdichtet werden.

In der Datenerfassungs- und/oder Auswerteeinheit 27 können die von der Einstellsystemsteuerung 26 ausgegebenen Steuersignale und die durch Sensoren des Konfigurationssystems 1, insbesondere an dem Kraftfahrzeug 3 vorgesehene Sensoren, erfassten Messwerte in zeitlicher Relation zu den Steuersignalen gespeichert und ausgewertet werden.

Die Datenerfassungs- und/oder Auswerteeinheit 27 ist mit wenigstens einem prüf- und/oder Einrichtungsmodul für wenigstens eine Fahrzeugführer-System-Schnittstelle wenigstens eines der oben genannten, möglichen technischen Begleit-, Führungs- und/oder Assistenzsysteme des Kraftfahrzeuges 3 gekoppelt.

Komponenten des Fahrzeugprüfstandes 2, wie die X- und Y-Schlitten und die Drehlager, können durch die Einstellsystemsteuerung 26 auch derart bewegt werden, dass ein in dem Kraftfahrzeug 2 befindlicher Fahrzeugführer wenigstens ein haptisches Signal wahrnimmt, das einer beispielsweise auf dem Bildschirm 61 dargestellten Verkehrssituation entspricht. Auf diese Weise können beispielsweise Fahrbahnunebenheiten oder eine glatte Fahrbahn über den Fahrzeugprüfstand 2 nachgestellt werden.

Die Einstellsystemsteuerung 26 weist wenigstens ein Einstellmodul für die wenigstens eine Signaleinheit auf. Ungeachtet dessen kann ein Einstellmodul auch direkt an ein oder mehreren, bei dem erfindungsgemäßen Konfigurationssystem 1 verwendeten Signaleinheiten vorgesehen sein. Über das Einstellmodul kann beispielsweise wenigstens eine Drehzahl der Räder 31, 32 des Kraftfahrzeuges 3, eine Bremseinstellung an dem Kraftfahrzeug 3, eine Kühlungseinstellung an dem Kraftfahrzeug 3 und/oder auch ein Zeitablauf oder eine zeitliche Rampe von nacheinander oder gleichzeitig an den X- und Y-Schlitten und Drehlagern des Fahrzeugprüfstandes 2 vorzunehmenden Einstellungen eingestellt oder voreingestellt werden. Das Einstellmodul ist mit wenigstens einer Messeinrichtung, das heißt mit wenigstens einem Sensor, des Konfigurationssystems 1 gekoppelt. Darüber hinaus weist das Einstellmodul eine Iterationseinheit auf, mit der Ausgabeintensität und/oder Signalart der wenigstens einen Signaleinheit iterativ zur Verringerung der Reaktionszeit änderbar ist

Das Konfigurationssystem 1 weist wenigstens eine Messeinrichtung, also wenigstens einen in, an, unter, über oder neben dem Fahrzeugprüfstand 2 und/oder in oder an dem Kraftfahrzeug 3 befindlichen Sensor, zum direkten oder indirekten Erfassen wenigstens einer Reaktionszeit des Fahrzeugführers auf das wenigstens eine optische und/oder akustische und/oder haptische Signal der wenigstens einen Signaleinheit auf.

Die von dem oder Sensor(en) des Konfigurationssystems 1 erfassten Messdaten, die durch die Einstellsystemsteuerung 26 an dem Fahrzeugprüfstand 2 eingestellten Werte, wie beispielsweise Positions- und Auslenkungswerte der X- und Y-Schlitten sowie der Drehlager, können bei dem Konfigurationssystem 1 über eine Visualisierungseinrichtung 28 zur Anzeige gebracht werden.

Das Konfigurationssystem 1 weist zudem wenigstens ein hinter, vor oder neben dem Kraftfahrzeug 3 befindliches Manipulationshindernis 30 auf. In dem gezeigten Ausführungsbeispiel sind drei Manipulationshindernisse 30 in Form von Pollern hinter dem Kraftfahrzeug 3 vorgesehen. Das Manipulationshindernis 30 kann jedoch auch eine andere Form aufweisen. Die Manipulationshindernisse 30 sind in Figur 1 entsprechend der gezeigten Pfeile entlang von Schienen 31 positionsveränderbar. Zudem sind die Manipulationshindernisse 30 in ihrer Höhe, also in z-Richtung, verstellbar.

Ein weiterer Bestandteil des Konfigurationssystems 1 ist ein vor der Front des Kraftfahrzeuges 3 vorgesehener Abstandsradar 24. Der Abstandsradar 24 ist entlang einer Schiene 25 entsprechend des gezeigten Pfeils positionsveränderbar.

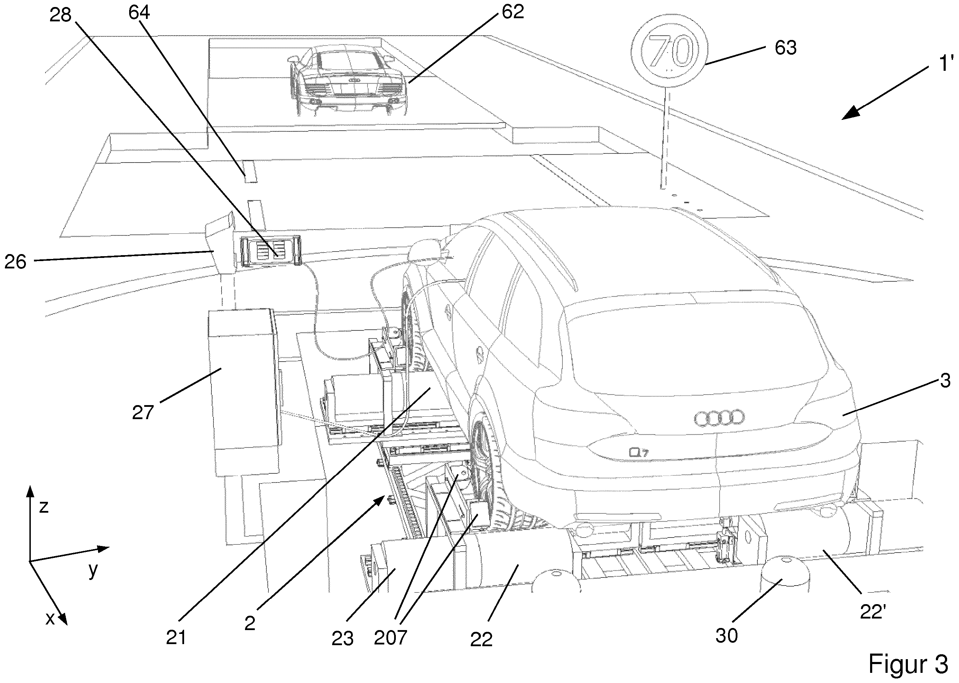

Figur 3 zeigt schematisch eine weitere Ausführungsform eines erfindungsgemäßen Konfigurationssystems 1' mit einer weiteren Ausführungsform eines erfindungsgemäßen Testsystems, an der das erfindungsgemäße Konfigurations- und das erfindungsgemäße Testverfahren ausgeführt werden kann, in einer perspektivischen Ansicht mit Blick auf ein Kraftfahrzeug von hinten und links.

Hinsichtlich der Komponenten des Konfigurationssystem 1', die mit gleichen Bezugszeichen wie die entsprechenden Komponenten des Konfigurationssystems 1 aus den Figuren 1 und 2 bezeichnet sind, wird an dieser Stelle auf obige Beschreibung dieser Komponenten verwiesen.

Im Unterschied zu dem Konfigurationssystem 1 weist das Konfigurationssystem 1' aus Figur 3 eine Anzeigevorrichtung zum Anzeigen von vor und/oder neben und/oder hinter dem Kraftfahrzeug 3 fahrenden Fahrzeugen 62, eine Verkehrszeichenanzeige 63 und eine Anzeigevorrichtung zum Anzeigen wenigstens einer Fahrbahnmarkierung 64. Die jeweiligen Anzeigen sind abrupt und/oder in einer zeitlichen Abfolge änderbar.

Figur 4 zeigt schematisch in einer Explosivdarstellung eine Grundkonstruktion eines bei dem Konfigurationssystem 1, 1' bzw. dem darin enthaltenen Testsystem einsetzbaren Fahrzeugprüfstandes 2.

Der Fahrzeugprüfstand 2 weist eine Prüfrollenanordnung 201 für eine Vorderachse des Kraftfahrzeuges 3 und eine Prüfrollenanordnung 202 für eine Hinterachse des Kraftfahrzeuges 3 auf. Die Prüfrollenanordnungen 201, 202 umfassen sowohl auf der linken als auch auf der rechten Fahrzeugseite jeweils zwei zueinander in y-Richtung verschiebbare, auf Rollenträgern 220 drehbar gelagerte Prüfrollen 21, 22. Die Verschiebung der Prüfrollen 21 der Prüfrollenanordnung 201 für die Vorderachse erfolgt entlang der y-Richtung auf Linearführungen 205 eines vorderen Y-Schlittens 203, während die Verschiebung der Prüfrollen 22 der Prüfrollenanordnung 202 für die Hinterachse entlang der y-Richtung auf Linearführungen 206 eines hinteren Y-Schlittens 204 vorgenommen wird.

An jeder Fahrzeugseite ist sowohl für die Vorderachse als auch für die Hinterachse des Kraftfahrzeuges 3 für wenigstens eine der Prüfrollen 21, 22 ein separater Antriebsmotor vorgesehen. Zwischen jeweils einem Paar von Prüfrollen 21 bzw. 22 ist jeweils eine hydraulische Bremsvorrichtung 205 vorgesehen, welche eine drehbare Scheitelrolle aufweist, deren Drehachse parallel zu der Drehachse der Prüfrollen 21, 22 ausgerichtet ist.

In dem gezeigten Ausführungsbeispiel weisen die Prüfrollen 21, 22 variierbare, unterschiedlichen Straßenbelägen entsprechende Oberflächenstrukturen 221, 222 auf.

Beidseitig des Fahrzeugprüfstandes 2 sind sowohl seitlich der Vorderräder 31 als auch seitlich der Hinterräder 32 des Kraftfahrzeuges 3 Gestelle 206 mit daran befestigten Führungsrollen 207 vorgesehen, mit welchen ein seitliches Ausbrechen der Räder 31, 32 eines auf dem Fahrzeugprüfstand 2 stehenden Kraftfahrzeuges 3 verhindert wird.

Die Y-Schlitten 203, 204 sind jeweils auf Drehlagern 208, 209 gelagert, durch die die Y-Schlitten in der x-y-Ebene verschwenkbar sind.

Die Drehlager 208 der Vorderachse befinden sich jeweils auf Y-Schlitten 210, die entlang der y-Richtung auf Linearführungen 212 verfahrbar sind. Die Linearführungen 212 sind jeweils auf X-Schlitten 214 vorgesehen, die in x-Richtung entlang von Linearführungen 216 verfahrbar sind. Die Linearführungen 216 befinden sich auf zwei parallelen Vorderachsengrundträgern 218.

Die Drehlager 209 der Hinterachse befinden sich jeweils auf X-Schlitten 211, die entlang der x-Richtung auf Linearführungen 213 verfahrbar sind. Die Linearführungen 213 sind auf einem Y-Schlitten 215 vorgesehen, der in y-Richtung entlang von Linearführungen 217 verfahrbar sind. Die Linearführungen 217 befinden sich auf einem Hinterachsengrundträger 219.

## Patentansprüche

1. Testsystem, das
einen Fahrzeugprüfstand (2);
ein auf dem Fahrzeugprüfstand (2) befindliches Kraftfahrzeug (3);
wenigstens eine, in oder an dem Fahrzeugprüfstand (2) und/oder separat von dem Fahrzeugprüfstand (2) und dem Kraftfahrzeug (3) vorgesehene Signaleinheit, mit welcher wenigstens ein optisches und/oder akustisches und/oder haptisches Signal ausgebbar ist;
wenigstens eine Messeinrichtung; und
eine Datenerfassungs- und/oder Auswerteeinheit (27) mit einem Bewertungsmodul für die von der Messeinrichtung erfassten Daten aufweist, wobei das Testsystem wenigstens ein Einstellmodul für die wenigstens eine Signaleinheit aufweist;
**dadurch gekennzeichnet,**
**dass** das Testsystem ein Testsystem zum Test einer fahrzeugführerspezifischen Signalwahrnehmung und -reaktion eines das Kraftfahrzeug (3) bedienenden Fahrzeugführers ist;
die wenigstens eine Messeinrichtung eine Messeinrichtung zum direkten oder indirekten Erfassen wenigstens einer Reaktionszeit des Fahrzeugführers auf das wenigstens eine Signal ist; und
das Einstellmodul (5) mit der Messeinrichtung gekoppelt ist und das Einstellmodul eine Iterationseinheit aufweist, mit der Ausgabeintensität und/oder Signalart der wenigstens einen Signaleinheit iterativ zur Verringerung der Reaktionszeit des Fahrzeugführers änderbar ist.

2. Testsystem nach Anspruch 1, **dadurch gekennzeichnet, dass** die Signaleinheit wenigstens einen Bildschirm (61) und/oder wenigstens eine Bildprojektionseinrichtung aufweist, wobei wenigstens eine Bildwiedergabefläche des Bildschirmes (61) und/oder der Bildprojektionseinrichtung in einem Sichtfeld des Fahrzeugführers ausgebildet ist.

3. Testsystem nach wenigstens einem der vorhergehenden Ansprüche, **dadurch gekennzeichnet, dass** der Fahrzeugprüfstand (2) wenigstens eine Antriebsvorrichtung für einen Antrieb wenigstens eines Rades (31, 32) des Kraftfahrzeuges (3) und/oder wenigstens eine Bremsvorrichtung für eine Abbremsung wenigstens eines Rades (31, 32) des Kraftfahrzeuges (3) und/oder eine Fahrzeugheckverschiebeeinrichtung und/oder ein Schwenkaggregat für das Kraftfahrzeug (3) und/oder eine Einrichtung zur Radentlastung wenigstens eines Rades (31, 32) des Kraftfahrzeuges (3) und/oder Prüfrollen (21, 22) mit variierbaren, unterschiedlichen Straßenbelägen entsprechenden Oberflächenstrukturen aufweist.

4. Konfigurationssystem (1, 1') zur fahrzeug- und/oder fahrzeugführerspezifischen Konfiguration wenigstens einer Fahrzeugführer-System-Schnittstelle wenigstens eines technischen Fahrsicherheits-, Begleit-, Führungs- und/oder Assistenzsystems eines Kraftfahrzeuges (3), **dadurch gekennzeichnet, dass** das Konfigurationssystem (1, 1') ein Testsystem nach wenigstens einem der vorhergehenden Ansprüche und wenigstens ein Prüf- und/oder Einrichtungsmodul für die wenigstens eine Fahrzeugführer-System-Schnittstelle aufweist.

5. Konfigurationssystem nach Anspruch 4, **dadurch gekennzeichnet, dass** das Einstellmodul und/oder die Signaleinheit mit der Datenerfassungs- und/oder Auswerteeinheit (27) gekoppelt ist oder sind, und die Datenerfassungs- und/oder Auswerteeinheit (27) mit dem wenigstens einen Prüf- und/oder Einrichtungsmodul gekoppelt ist.

6. Testverfahren mit einem Testsystem nach Anspruch 1, bei dem
ein Kraftfahrzeug (3) auf einem Fahrzeugprüfstand (2) betrieben wird, und
durch wenigstens eine, in oder an dem Fahrzeugprüfstand (2) und/oder separat von dem Fahrzeugprüfstand (2) und dem Kraftfahrzeug (3) vorgesehene Signaleinheit wenigstens ein optisches und/oder akustisches und/oder haptisches Signal ausgegeben wird;
**dadurch gekennzeichnet,**
**dass** das Testverfahren ein Testverfahren zum Test einer fahrzeugführerspezifischen Signalwahrnehmung und -reaktion ist, wobei das Kraftfahrzeug (3) zumindest teilweise durch einen Fahrzeugführer bedient wird;
durch wenigstens eine Messeinrichtung direkt oder indirekt wenigstens eine Reaktionszeit des Fahrzeugführers auf das wenigstens eine Signal erfasst wird;
durch eine Datenerfassungs- und/oder Auswerteeinheit (27) wenigstens eine erfasste Reaktionszeit mit einer Soll-Reaktionszeit verglichen wird;
dann, wenn die erfasste Reaktionszeit die Soll-Reaktionszeit um mehr als einen vorgegebenen und/oder erlaubten Toleranzbetrag überschreitet, mit wenigstens einem Elnstellmodul an der wenigstens einen Signaleinheit wenigstens eine Ausgabeintensität und/oder wenigstens eine Signalart und/oder wenigstens eine Stellgröße für einen Aktor eines Assistenzsystems des Kraftfahrzeuges (3) derart eingestellt wird, dass die Reaktionszeit verkleinert wird; und
iterativ mit dem wenigstens einen Einstellmodul die wenigstens eine Ausgabeintensität und/oder die wenigstens eine Signalart der wenigstens einen Signaleinheit so lange geändert wird, bis die erfasste Reaktionszeit der Soll-Reaktionszeit entspricht und/oder die erfasste Reaktionszeit im vorgegebenen oder erlaubten Toleranzbereich liegt.

7. Testverfahren nach Anspruch 6, **dadurch gekennzeichnet, dass** durch die wenigstens eine Signaleinheit wenigstens zwei unterschiedliche Signale zeitgleich ausgegeben werden, signalabhängig die erfassten Reaktionszeiten mit zugehörigen, - in der Datenerfassungs- und/oder Auswerteeinheit (27) hinterlegten Soll-Reaktionszeiten verglichen werden und bei Ermittlung wenigstens eines Toleranzbetrages zwischen den erfassten Reaktionszeiten und den Soll-Reaktionszeiten die wenigstens eine Signaleinheit so eingestellt wird, dass das Signal, welches von den zeitgleich ausgegebenen Signalen die höhere Sicherheitsrelevanz besitzt, verstärkt und/oder länger und/oder in häufigeren Ausgabeintervallen als das Signal mit der geringeren Sicherheitsrelevanz ausgegeben wird und/oder vorrangig dem Fahrzeugführer übermittelt wird, und/oder das Signal, welches von den zeitgleich ausgegebenen Signalen die niedrigere Sicherheitsrelevanz besitzt, unterdrückt oder mit geringerer Ausgabeintensität und/oder kürzer und/oder in weniger häufigen Ausgabeintervallen als das Signal mit der höheren Sicherheitsrelevanz ausgegeben wird.

8. Testverfahren nach Anspruch 6 oder 7, **dadurch gekennzeichnet, dass** die Signalausgabe der Signaleinheit in Abhängigkeit von mit der Datenerfassungs- und/oder Auswerteeinheit (27) ermittelten und/oder darin hinterlegten fahrzeugführerspezifischen Daten in nacheinander ablaufenden Testzyklen verändert wird.

9. Testverfahren nach wenigstens einem der Ansprüche 6 bis 8, **dadurch gekennzeichnet, dass** wenigstens ein Signal, bei dem die erfasste Regelgröße wenigstens einem in der Datenerfassungs- und/oder Auswerteeinheit (27) hinterlegten Regelgrößen-Sollwert entspricht und/oder die erfasste Reaktionszeit des Fahrzeugführers wenigstens einem in der Datenerfassungs- und/oder Auswerteeinheit (27) hinterlegten Reaktions-Sollwert entspricht oder diesen unterschreitet, fahrzeugführerbezogen in einem Steuergerät des Kraftfahrzeuges (3) gespeichert wird.

10. Testverfahren nach wenigstens einem der Ansprüche 6 bis 9, **dadurch gekennzeichnet, dass** die Datenerfassungs- und/oder Auswerteeinheit (27) eine Logik aufweist, die erfasste Reaktionszeiten und/oder Signale der Signaleinheit zu Gesamtinformationen für den Fahrzeugführer verdichtet oder konzentriert.

11. Testverfahren nach wenigstens einem der Ansprüche 6 bis 10, **dadurch gekennzeichnet, dass** eine Einstellsystemsteuerung (26) vorgesehen ist, mit der der Fahrzeugprüfstand (2), das Kraftfahrzeug (3) und die wenigstens eine Signaleinheit gleichzeitig gesteuert werden.

12. Testverfahren nach Anspruch 11, **dadurch gekennzeichnet, dass** die Einstellsystemsteuerung (26) in einem Trainingsablauf Signale der Signaleinheit ändert, bis Signale ermittelt sind, bei welchen wenigstens eine erfasste Reaktionszeit des Fahrzeugführers der Soll-Reaktionszeit entspricht oder diese unterschreitet.

13. Konfigurationsverfahren zur fahrzeugführerspezifischen Konfiguration wenigstens einer Fahrzeugführer-System-Schnittstelle eines technischen Fahrsicherheits-, Begleit-, Führungs- und/oder Assistenzsystems eines Kraftfahrzeuges (3),
**dadurch gekennzeichnet,**
**dass** in dem Konfigurationsverfahren ein Testverfahren nach wenigstens einem der Ansprüche 6 bis 12 verwendet wird und mit wenigstens einem Prüf- und/oder Einrichtungsmodul wenigstens ein sich aus einer Einstellung der Fahrzeugführer-System-Schnittstelle ergebendes Signal des der Fahrzeugführer-System-Schnittstelle zuzuordnenden technischen Fahrsicherheits-, Begleit-, Führungs- und/oder Assistenzsystems mit wenigstens einer Signaleinstellung der wenigstens einen Signaleinheit verglichen und bei einer Abweichung die Einstellung der Fahrzeugführer-System-Schnittstelle solange verändert wird, bis eine Übereinstimmung zwischen der Signaleinstellung der wenigstens einen Signaleinheit und dem Signal des der Fahrzeugführer-System-Schnittstelle zuzuordnenden technischen Fahrsicherheits-, Begleit-, Führungs- und/oder Assistenzsystems erzielt ist.

14. Konfigurationsverfahren nach Anspruch 13, **dadurch gekennzeichnet, dass** die Signaleinheit wenigstens zwei auf unterschiedlichen Kommunikationswegen durch den Fahrzeugführer registrierbare Signale ausgibt und eine Datenerfassungs- und/oder Auswerteeinheit (27) auswertet, auf welchem Kommunikationsweg, das heißt, auf akustischem oder visuellem oder haptischem Weg, der Fahrzeugführer am schnellsten oder am geeignetsten auf das jeweilige Signal reagiert, und daraufhin die wenigstens eine Fahrzeugführer-System-Schnittstelle, die auf diesem Kommunikationsweg basiert, so eingestellt wird, dass das der Fahrzeugführer-System-Schnittstelle zugehörige Fahrsicherheits-, Begleit-, Führungs- und/oder Assistenzsystem gegenüber anderen Fahrsicherheits-, Begleit-, Führungs- und/oder Assistenzsystemen des Kraftfahrzeuges (3) favorisiert dieses Signal an das Kraftfahrzeug und/oder den Fahrzeugführer übermittelt.

15. Konfigurationsverfahren nach Anspruch 13 oder 14, **dadurch gekennzeichnet, dass** beim Einstellen der wenigstens einen Fahrzeugführer-System-Schnittstelle eine Ansprechschwelle einer Antiblockierregelung und/oder eine Ansprechschwelle einer Antischlupfregelung und/oder eine Spurbreitengrenze eines Spurhalteassistenzsystems und/oder eine Ansprechschwelle eines Bremsassistenzsystems und/oder eine Abstandsuntergrenze eines Abstandsassistenzsystems und/oder eine Geschwindigkeitsobergrenze des Kraftfahrzeuges (3) und/oder eine Leistungsobergrenze des Kraftfahrzeuges (3) eingestellt wird.

## Claims

1. Test system comprising
a Vehicle Test Stand (2);
a motor vehicle (3) located on the Vehicle Test Stand (2);
at least one signal unit provided in or on the Vehicle Test Stand (2) and/or separately from the Vehicle Test Stand (2) and the motor vehicle (3), with which at least one optical and/or acoustic and/or haptic signal can be output;
at least one measuring device; and
a Data Acquisition and/or Evaluation Unit (27) having an evaluation module for the data acquired by the measuring device, the test system having at least one adjustment module for the at least one signal unit;
**characterized in that**
the test system is a test system for testing a vehicle driver-specific signal perception and reaction of a vehicle driver operating the motor vehicle (3);
the at least one measuring device is a measuring device for directly or indirectly detecting at least one reaction time of the vehicle driver to the at least one signal; and
the adjustment module (5) is coupled to the measuring device and the adjustment module has an iteration unit with which the output intensity and/or signal type of the at least one signal unit can be changed iteratively to reduce the reaction time of the vehicle driver.

2. Test system according to claim 1, **characterized in that** the signal unit has at least one screen (61) and/or at least one image projection device, at least one image reproduction surface of the screen (61) and/or of the image projection device being formed in a field of view of the vehicle driver.

3. Test system according to at least one of the preceding claims, **characterized in that** the Vehicle Test Stand (2) comprises at least one drive device for driving at least one wheel (31, 32) of the motor vehicle (3) and/or at least one braking device for braking at least one wheel (31, 32) of the motor vehicle (3) and/or a vehicle rear displacement device and/or a swivel unit for the motor vehicle (3) and/or a device for relieving the wheel load of at least one wheel (31, 32) of the motor vehicle (3) and/or test rollers (21, 22) with variable surface structures corresponding to different road surfaces.

4. Configuration system (1, 1') for the vehicle-specific and/or vehicle driver-specific configuration of at least one Vehicle Driver System Interface of at least one technical Driving Safety, Support, Guidance and/or Assistance System of a motor vehicle (3), **characterized in that** the configuration system (1, 1') has a test system according to at least one of the preceding claims and at least one Test and/or Set-up Module for the at least one Vehicle Driver System Interface.

5. Configuration system according to claim 4, **characterized in that** the adjustment module and/or the signal unit is or are coupled to the Data Acquisition and/or Evaluation Unit (27) , and the Data Acquisition and/or Evaluation Unit (27) is coupled to the at least one Test and/or Set-up Module.

6. Test method with a test system according to claim 1, wherein
a motor vehicle (3) is operated on a Vehicle Test Stand (2), and
at least one optical and/or acoustic and/or haptic signal is output by at least one signal unit provided in or on the Vehicle Test Stand (2) and/or separately from the Vehicle Test Stand (2) and the motor vehicle (3);
**characterized in that**
the test method is a test method for testing a vehicle driver-specific signal perception and reaction, the motor vehicle (3) being operated at least partially by a vehicle driver;
at least one reaction time of the vehicle driver to the at least one signal is detected directly or indirectly by at least one measuring device;
by means of a Data Acquisition and/or Evaluation Unit (27) at least one detected reaction time is compared with a target reaction time;
then if the detected reaction time exceeds the set reaction time by more than a predetermined and/or permitted tolerance amount, at least one output intensity and/or at least one signal type and/or at least one manipulated variable for an actuator of an assistance system of the motor vehicle (3) is set with at least one setting module on the at least one signal unit in such a way that the reaction time is reduced; and
the at least one output intensity and/or the at least one signal type of the at least one signal unit is changed iteratively by means of the at least one adjustment module until the detected reaction time corresponds to the desired reaction time and/or the detected reaction time lies in the predetermined or permitted tolerance range.

7. Test method according to claim 6, **characterized in that** at least two different signals are output simultaneously by the at least one signal unit, the detected reaction times are compared as a function of the signal with associated set point reaction times stored in the Data Acquisition and/or Evaluation Unit (27) , and when at least one tolerance amount between the detected reaction times and the set point reaction times is determined, the at least one signal unit is set in such a way that the signal which has the higher safety relevance among the simultaneous output signals is amplified and/or output for longer and/or at more frequent output intervals than the signal with the lower safety relevance and/or is transmitted with priority to the vehicle driver, is amplified and/or is output longer and/or at more frequent output intervals than the signal with the lower safety relevance and/or is transmitted with priority to the vehicle driver, and/or the signal which has the lower safety relevance among the simultaneous output signals is suppressed or is output with lower output intensity and/or is output shorter and/or at less frequent output intervals than the signal with the higher safety relevance.

8. Test method according to claim 6 or 7, **characterized in that** the signal output of the signal unit is changed in successive test cycles as a function of vehicle driver-specific data determined with the Data Acquisition and/or Evaluation Unit (27) and/or stored therein.

9. Test method according to at least one of claims 6 to 8, **characterized in that** at least one signal, in which the sensed controlled variable corresponds to at least one controlled variable set point stored in the Data Acquisition and/or Evaluation Unit (27) and/or the sensed reaction time of the vehicle driver corresponds to at least one reaction set point stored in the Data Acquisition and/or Evaluation Unit (27) or falls below it, is stored in a control unit of the motor vehicle (3) in relation to the vehicle driver.

10. Test method according to at least one of claims 6 to 9, **characterized in that** the Data Acquisition and/or Evaluation Unit (27) has logic which condenses or concentrates detected reaction times and/or signals from the signal unit into overall information for the vehicle driver.

11. Test method according to at least one of claims 6 to 10, **characterized in that** a setting system control (26) is provided, with which the Vehicle Test Stand (2), the motor vehicle (3) and the at least one signal unit are controlled simultaneously.

12. Test method according to claim 11, **characterized in that** the setting system controller (26) changes signals of the signal unit in a training sequence until signals are determined in which at least one detected reaction time of the vehicle driver corresponds to or falls below the target reaction time.

13. Configuration method for driver-specific configuration of at least one Vehicle Driver System Interface of a technical Driving Safety, Support, Guidance and/or Assistance System of a motor vehicle (3),
**characterized in that**
a test method according to at least one of claims 6 to 12 is used in the configuration method, and at least one Test and/or Set-up Module is used to compare at least one signal, resulting from a setting of the Vehicle Driver System Interface, of the technical Driving Safety, Support, Guidance and/or Assistance System to be assigned to the Vehicle Driver System Interface with at least one signal setting of the at least one signal unit, and, in the event of a deviation, the setting of the Vehicle Driver System Interface is changed until a match is achieved between the signal setting of the at least one signal unit and the signal of the technical Driving Safety, Support, Guidance and/or Assistance System to be assigned to the Vehicle Driver System Interface.

14. Configuration method according to claim 13, **characterized in that** the signal unit outputs at least two signals which can be registered on different communication channels by the vehicle driver and a Data Acquisition and/or Evaluation Unit (27) evaluates on which communication channel, i.e. acoustic or visual or haptic channel, the vehicle driver reacts most quickly or most appropriately to the respective signal, and thereupon the at least one Vehicle Driver System Interface which is based on this communication channel is set in such a way that the Driving Safety, Support, Guidance and/or Assistance System associated with the Vehicle Driver System Interface transmits this signal to the motor vehicle and/or the vehicle driver in favor of other Driving Safety, Support, Guidance and/or Assistance Systems of the motor vehicle (3).

15. Configuration method according to claim 13 or 14, **characterized in that**, when setting the at least one Vehicle Driver System Interface, a response threshold of an antilock braking system and/or a response threshold of an traction control system and/or a lane width limit of a lane departure warning system and/or a response threshold of a brake assistance system and/or a distance lower limit of a distance assistance system and/or an upper speed limit of the motor vehicle (3) and/or an upper power limit of the motor vehicle (3) is set.

## Revendications

1. Système de test, comprenant
un banc d'essai de véhicule (2) ;
un véhicule à moteur (3) situé sur le banc d'essai de véhicule (2) ;
au moins une unité de signalisation prévue dans ou sur le banc d'essai de véhicule (2) et/ou séparément du banc d'essai de véhicule (2) et du véhicule à moteur (3) capable d'émettre au moins un signal optique et/ou acoustique et/ou tactile ;
au moins un dispositif de mesure ;
et une unité d'acquisition et/ou d'évaluation de données (27) comportant un module d'évaluation pour les données acquises par le dispositif de mesure,
le système de test comportant au moins un module de réglage pour au moins une unité de signalisation ;
**caractérisé en ce que**
le système de test constitue un système de test pour tester la perception à un signal et la réaction à un signal spécifiques au conducteur *conduisant le véhicule à moteur (3)*; dont l'au moins un dispositif de mesure est un dispositif de mesure pour détecter directement ou indirectement au moins un temps de réaction du conducteur du véhicule à l'au moins un signal ; et
dont le module de réglage (5) est couplé au dispositif de mesure et dont le module de réglage présente une unité d'itération avec laquelle l'intensité de sortie et/ou le type de signal de l'au moins une unité de signal peuvent être modifiés de manière itérative afin de réduire le temps de réaction du conducteur du véhicule.

2. Système de test selon la revendication 1, **caractérisé en ce que** l'unité de signalisation comprend au moins un écran (61) et/ou au moins un dispositif de projection d'images, dans lequel au moins une surface de reproduction d'images de l'écran (61) et/ou du dispositif de projection d'images est formée dans un champ de vision du conducteur du véhicule.

3. Système d'essai selon au moins l'une des revendications précédentes, **caractérisé en ce que** le banc d'essai de véhicule (2) comprend au moins un
dispositif d'entraînement pour l'entraînement d'au moins une roue (31, 32) du véhicule à moteur (3) et/ou au moins un dispositif de freinage pour le freinage d'au moins une roue (31, 32) du véhicule à moteur (3) et/ou un dispositif de déplacement arrière du véhicule et/ou une unité de pivotement pour le véhicule à moteur (3) et/ou un dispositif pour le délestage d'au moins une roue (31, 32) du véhicule à moteur (3) et/ou des rouleaux de contrôle (21, 22) avec des structures de surface variables correspondant à différentes surfaces de route.

4. Système de configuration (1, 1') pour la configuration spécifique au véhicule et/ou au conducteur du véhicule d'au moins une interface conducteur-système d'au moins un système technique de sécurité, d'accompagnement, de guidage et/ou d'assistance à la conduite d'un véhicule à moteur (3), **caractérisé en ce que** le système de configuration (1, 1') présente un système de test selon au moins une des revendications précédentes et au moins un module de test et/ou de réglage pour l'au moins une interface conducteur-système.

5. Système de configuration selon la revendication 4, **caractérisé en ce que** le module de réglage et/ou l'unité de signalisation est/sont couplé(e)s à l'unité d'acquisition et/ou d'évaluation de données (27), et l'unité d'acquisition et/ou d'évaluation de données (27) est couplée à l'au moins un module de test et/ou de réglage.

6. *Méthode d'essai avec un système d'essai selon la revendication 1,* dans laquelle un véhicule à moteur (3) est fait fonctionner sur un banc d'essai de véhicules (2), et au moins un signal optique et/ou acoustique et/ou tactile est émis par au moins une unité de signalisation prévue dans ou sur le banc d'essai de véhicules (2) et/ou séparément du banc d'essai de véhicules (2) et du véhicule à moteur (3) ; **caractérisée en ce que**
la méthode d'essai est une méthode d'essai pour tester la perception d'un signal et la réaction à un signal spécifiques au conducteur,
le véhicule à moteur (3) étant conduit au moins partiellement par un conducteur de véhicule ;
au moins un temps de réaction du conducteur du véhicule à au moins un des signaux est enregistré directement ou indirectement par au moins un dispositif de mesure ;
au moins un temps de réaction détecté est comparé à un temps de réaction souhaité au moyen d'une unité d'acquisition et/ou d'évaluation de données (27) ;
puis ensuite, si le temps de réaction détecté dépasse le temps de réaction souhaité de plus d'une quantité de tolérance prédéterminée et/ou autorisée, au moins une intensité de sortie et/ou au moins un type de signal et/ou au moins une grandeur de réglage pour un actionneur d'un système d'assistance du véhicule à moteur (3) est réglé avec au moins un module de réglage sur l'au moins une unité de signal de manière que le temps de réaction soit réduit ; et
l'au moins une intensité de sortie et/ou l'au moins un type de signal de l'au moins une unité de signalisation sont modifiés de manière itérative au moyen de l'au moins un module de réglage jusqu'à ce que le temps de réaction détecté corresponde au temps de réaction souhaité et/ou que le temps de réaction détecté se situe dans la plage de tolérance prédéfinie ou autorisée.

7. Méthode d'essai selon la revendication 6, **caractérisée en ce qu'**au moins deux signaux différents sont émis simultanément par l'au moins une unité de signalisation, après quoi les temps de réaction détectés sont comparés, en fonction du signal, à des temps de réaction souhaités associés qui sont mémorisés dans l'unité d'acquisition et/ou d'évaluation de données (27) et, lorsqu'au moins une valeur de tolérance entre les temps de réaction détectés et les temps de réaction souhaités est déterminée, l'au moins une unité de signal est réglée de telle sorte que le signal qui a la plus grande importance pour la sécurité parmi les signaux émis simultanément est amplifié et/ou émis pendant plus longtemps et/ou à des intervalles d'émission plus fréquents que le signal ayant la plus faible importance pour la sécurité et/ou est émis en priorité pour le conducteur du véhicule, et/ou le signal qui, parmi les signaux émis simultanément, a la plus faible importance pour la sécurité est supprimé ou est émis avec une intensité de sortie plus faible et/ou est émis plus court et/ou à des intervalles de sortie moins fréquents que le signal ayant la plus grande importance pour la sécurité.

8. Méthode d'essai selon la revendication 6 ou 7, **caractérisée en ce que** la sortie de signal de l'unité de signalisation est modifiée dans des cycles de test successifs en fonction de données spécifiques au conducteur du véhicule déterminées par l'unité d'acquisition et/ou d'évaluation de données (27) et/ou stockées dans celle-ci.

9. Méthode d'essai selon au moins l'une des revendications 6 à 8, **caractérisée en ce qu'**au moins un signal, dans lequel la variable de contrôle détectée correspond à au moins une valeur de consigne de la variable de contrôle mémorisée dans l'unité d'acquisition et/ou d'évaluation de données (27) et/ou le temps de réaction détecté du conducteur du véhicule correspond à au moins une valeur de consigne de réaction mémorisée dans l'unité d'acquisition et/ou d'évaluation de données (27) ou est inférieur à celle-ci, est mémorisé ensemble avec le conducteur du véhicule correspondant dans une unité de commande du véhicule à moteur (3).

10. Méthode d'essai selon au moins une des revendications 6 à 9, **caractérisée en ce que** l'unité d'acquisition et/ou d'évaluation de données (27) présente une logique qui condense ou concentre les temps de réaction et/ou les signaux acquis de l'unité de signalisation en une information globale pour le conducteur du véhicule.

11. Méthode d'essai selon au moins une des revendications 6 à 10, **caractérisée en ce qu'**il est prévu une commande de système de réglage (26) avec laquelle le banc d'essai de véhicule (2), le véhicule à moteur (3) et l'au moins une unité de signalisation sont commandés simultanément.

12. Méthode d'essai selon la revendication 11, **caractérisée en ce que** la commande du système de réglage (26) modifie les signaux de l'unité de signalisation dans une séquence d'apprentissage jusqu'à ce que soient déterminés des signaux dans lesquels au moins un temps de réaction détecté du conducteur du véhicule correspond au temps de réaction souhaité ou est inférieur à celui-ci.

13. Une méthode de configuration pour la configuration spécifique au conducteur du véhicule d'au moins une interface conducteur-système d'un système technique de sécurité, d'accompagnement, de guidage et/ou d'assistance à la conduite d'un véhicule à moteur (3), **caractérisée en ce qu'**une méthode d'essai selon au moins une des revendications 6 à 12 est utilisée dans la méthode de configuration et que, avec au moins un module de test et/ou de réglage, au moins un signal résultant d'un réglage de l'interface conducteur-système du système technique de sécurité, d'accompagnement, de guidage
et/ou d'assistance à la conduite attribué à l'interface conducteur-système est comparé avec au moins un réglage de signalisation de l'au moins une unité de signalisation et, où, en cas d'écart, le réglage de l'interface conducteur-système est modifié jusqu'à ce que le réglage de la signalisation de l'au moins une unité de signalisation et le signal l'interface conducteur-système attribué au système technique de sécurité, de guidage et/ou d'assistance soient en correspondance.

14. Procédé de configuration selon la revendication 13, **caractérisé en ce que** l'unité de signalisation émet au moins deux signaux qui peuvent être enregistrés par le conducteur du véhicule par de différents chemins de communication, et une unité de saisie et/ou d'évaluation de données (27) évalue sur quel chemin de communication, c'est-à-dire sur un chemin acoustique ou visuel ou tactile, le conducteur du véhicule réagit le plus rapidement ou le plus adéquatement au signal respectif, et ensuite, la au moins une interface conducteur-système basée sur cette voie de communication est réglée de telle sorte que
le système de sécurité, d'accompagnement, de guidage et/ou d'assistance de conduite associé à l'interface conducteur-système transmet ce signal au véhicule à moteur et/ou au conducteur de véhicule de préférence à d'autres systèmes de sécurité, d'accompagnement, de guidage et/ou d'assistance de conduite du véhicule à moteur (3).

15. Procédé de configuration selon la revendication 13 ou 14, **caractérisé en ce que**, lors du réglage de l'au moins une interface conducteur-système, on règle un seuil de réponse d'un système de commande antiblocage et/ou un seuil de réponse d'un système de commande antipatinage et/ou une limite de largeur de voie d'un système d'avertissement de sortie de voie et/ou un seuil de réponse d'un système d'assistance au freinage et/ou une limite inférieure de distance d'un système d'assistance à la distance et/ou une limite supérieure de vitesse du véhicule à moteur (3) et/ou une limite supérieure de puissance du véhicule à moteur (3).
